(19) Europäisches Patentamt / European Patent Office / Office européen des brevets

(11) **EP 4 034 597 B1**

(12) **EUROPEAN PATENT SPECIFICATION**

(45) Date of publication and mention of the grant of the patent:
**31.12.2025 Bulletin 2026/01**

(21) Application number: **20786376.2**

(22) Date of filing: **21.09.2020**

(51) International Patent Classification (IPC):
**C08L 23/16** *(2006.01)*    **C08F 210/16** *(2006.01)*

(52) Cooperative Patent Classification (CPC):
(C-Sets available)
**C08L 23/16;** C08F 4/65908; C08F 4/65912;
C08F 210/18; C08L 2205/035            (Cont.)

(86) International application number:
**PCT/US2020/051867**

(87) International publication number:
**WO 2021/061577 (01.04.2021 Gazette 2021/13)**

(54) **ETHYLENE/ALPHA-OLEFIN/POLYENE INTERPOLYMER COMPOSITIONS**

ETHYLEN/ALPHA-OLEFIN/POLYENZUSAMMENSETZUNGEN

COMPOSITIONS INTERPOLYMÈRES D'ÉTHYLÈNE/ALPHA-OLÉFINE/POLYÈNE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.09.2019  US 201962904994 P**

(43) Date of publication of application:
**03.08.2022  Bulletin 2022/31**

(73) Proprietor: **Dow Global Technologies LLC
Midland, MI 48674 (US)**

(72) Inventors:
• **WU, Xiaosong**
  **Lake Jackson, Texas 77566 (US)**
• **THAKUR, Varun**
  **8810 Horgen (CH)**

(74) Representative: **Boult Wade Tennant LLP
Salisbury Square House
8 Salisbury Square
London EC4Y 8AP (GB)**

(56) References cited:
**EP-A1- 3 464 462       WO-A1-2019/157687
WO-A1-2019/161013**

(52) Cooperative Patent Classification (CPC): (Cont.)

    C-Sets
    **C08F 210/18, C08F 4/64193;**
    **C08L 23/16, C08L 23/16, C08L 23/16, C08L 23/16;**
    C08F 210/18, C08F 210/06, C08F 236/20,
    C08F 2500/03, C08F 2500/17, C08F 2500/27,
    C08F 2500/33, C08F 2500/32, C08F 2500/34,

C08F 2500/35;
C08F 210/18, C08F 210/06, C08F 236/20,
C08F 2500/04, C08F 2500/17, C08F 2500/27,
C08F 2500/33, C08F 2500/32, C08F 2500/34,
C08F 2500/35;
C08F 210/18, C08F 210/06, C08F 236/20,
C08F 2500/17

## Description

BACKGROUND OF THE INVENTION

Ethylene-propylene-diene (EPDM) elastomers are widely used in the manufacture of automotive articles, such as weather strips, hoses and belts. The molecular microstructural features of these elastomers, such as comonomer content, molecular weight, molecular weight distribution, diene content, branching content and type, have influence the final physical properties of the manufacture article. In addition to good mechanical properties and good processability, current automotive manufacturing designs require that the elastomers also have high volume resistivity (VR). High volume resistivity is needed to improve the electrochemical degradation (ECD) resistance of the elastomer, and thus eliminate corrosion and failure of automotive articles, such as the corrosion of weather strips and the failure of engine coolant hoses.

The automotive industry increasingly demands light weight vehicles, in order to meet increasingly stringent emission standards. One weight-reduction strategy is to replace high strength steel, for outer door panels, with lighter weight Magnesium/Aluminum (Mg/Al) alloys (also, Al or Mg metals). The use of such Mg/Al alloys increases the potential for electrons flow from the Mg/Al outer panels to the steel inner panels, through an elastomer profile located between the two panels. This electron flow potential increases in the presence of humidity and salt-water. Over time, this results in the electrochemical degradation of the intervening profile, and in the oxidation of both the outer and inner metal surfaces. There is a need for electrically resistive elastomer formulations, such as EPDM-based formulations. However, such formulations must maintain good mechanical properties, good green strength, excellent hardness, good processability, and high cure rates. Such formulations must produce articles of uniform structure and integrity.

Some conventional elastomer compositions are described in the following patent references. International Publication WO2014/084893 discloses two ethylene/alpha-olefin/nonconjugated polyene interpolymers, and compositions containing the same. The compositions are used to form vulcanized rubber, and provide improved mixing, processability and mechanical properties. International Publication WO2013/096573 discloses solution polymerizations of ethylene/alpha-olefin/nonconjugated polyene interpolymers with rheology ratios greater than, or equal to, 20. These interpolymers can be produced at higher temperatures, and thus at lower viscosities. See also International Publication WO2007/136494 (an additional polymerization of ethylene/alpha-olefin/nonconjugated polyene interpolymers). International Publication WO2011/008837 discloses compositions containing two ethylene/alpha-olefin/nonconjugated polyene interpolymers. These compositions can be used to form weather strips with excellent mechanical properties and a high degree of consistency. WO 2019/161013 A1 refers to a composition comprising at least one or more ethylene/alpha-olefin interpolymers and an acid acceptor. EP 3464 462 A1 refers to rubber compositions for producing foamed sponge profiles which contain at least two ethylene/a-olefin/non-conjugated diene interpolymers. WO 2019/157687 A1 refers to a first composition comprising a first ethylene/$\alpha$-olefin/diene interpolymer and a second ethylene/$\alpha$-olefin interpolymer. US 2009/239014 A1 relates to a rubber composition, a crosslinked product and a foamed product of the composition, a rubber molded product comprising the composition, and uses thereof.

However, as discussed, there remains a need for electrically resistive elastomer formulations, such as EPDM-based formulations. Such formulations must maintain excellent mechanical properties (for example, tensile strength and elasticity), good green strength, and good cure rate and processability. These needs have been met by the following invention.

SUMMARY OF THE INVENTION

A composition comprising a first composition and a second composition, and

wherein the first composition comprises a first ethylene/alpha-olefin/nonconjugated polyene interpolymer and a second ethylene/alpha-olefin/nonconjugated polyene interpolymer; and
wherein the second composition comprises a third ethylene/alpha-olefin/non-conjugated polyene interpolymer and a fourth ethylene/alpha-olefin/nonconjugated polyene interpolymer; and
wherein the first composition has a Mooney Viscosity (ML(1+4), 125°C) $\geq$ 50 and (ML(1+4), 125°C) $\leq$ 84, and a Rheology Parameter ((RR/Mn) x 1000) $\geq$ 0.50 and ((RR/Mn) x 1000) $\leq$ 0.76;
wherein the second composition has a Mooney Viscosity (ML(1+4), 125°C) < 50, and a Rheology Parameter ((RR/Mn) x 1000) $\geq$ 0.60 and ((RR/Mn) x 1000) $\leq$ 2.00;
wherein RR is V0.1/V100 and wherein V0.1 and V100 are determined as set out herein.

BRIEF DESCRIPTION OF THE DRAWINGS

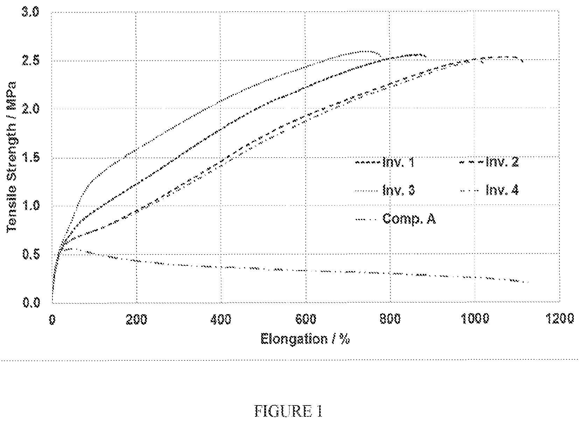

Figure 1 depicts Green Strength profiles (Tensile Strength versus Elongation) for inventive and comparative compositions. Order of profiles from highest to lowest Tensile Strength, at 600% Elongation: Inv. 3, Inv. 1, Inv. 2, Inv. 4, Comp. A.

**DETAILED** DRESCRIPTION OF THE INVENTION

Polymer compositions have been discovered that provide high volume resistivity, excellent mechanical properties and green strength, and good cure rate and processability. These compositions can be used to form uniform extruded profiles. As discussed above, the compositions each comprise a first composition and a second composition, and

wherein the first composition comprises a first ethylene/alpha-olefin/nonconjugated polyene interpolymer and a second ethylene/alpha-olefin/nonconjugated polyene interpolymer; and
wherein the second composition comprises a third ethylene/alpha-olefin/nonconjugated polyene interpolymer and a fourth ethylene/alpha-olefin/nonconjugated polyene interpolymer; and
wherein the first composition has a Mooney Viscosity (ML(1+4), 125°C) $\geq$ 50 and (ML(1+4), 125°C) $\leq$ 84, and a Rheology Parameter ((RR/Mn) x 1000) $\geq$ 0.50 and ((RR/Mn) x 1000) $\leq$ 0.76;
wherein the second composition has a Mooney Viscosity (ML(1+4), 125°C) < 50, and a Rheology Parameter ((RR/Mn) x 1000) $\geq$ 0.60 and ((RR/Mn) x 1000) $\leq$ 2.00.

As used herein, the Rheology Parameter, ((RR/Mn) x 1000), is an indication of the compositional properties (for example, molecular weight, MWD, long chain branching) of the respective first composition or second composition, and which properties provide a good balance of mechanical properties and processability of the composition.

In regard to the first composition, the second ethylene/alpha-olefin/nonconjugated polyene interpolymer differs from the first ethylene/alpha-olefin/nonconjugated polyene interpolymer in in at least one property selected from Mn, Mw, Mz, MWD, Mooney Viscosity, V0.1, V100, RR, or any combination thereof, and further Mn, Mw, Mz, MWD, or any combination thereof. In regard to the second composition, the fourth ethylene/alpha-olefin/nonconjugated polyene interpolymer differs from the third ethylene/alpha-olefin/nonconjugated polyene interpolymer in in at least one property selected from Mn, Mw, Mz, MWD, Mooney Viscosity, V0.1, V100, RR, or any combination thereof, and further Mn, Mw, Mz, MWD, or any combination thereof.

In one embodiment, or a combination of two or more embodiments, each described herein, the first composition has a Rheology Parameter, ((RR/Mn) x 1000), $\geq$ 0.52, or $\geq$ 0.54, or $\geq$ 0.56, or $\geq$ 0.58, or $\geq$ 0.60. In a further embodiment, the first composition has a Rheology Parameter, ((RR/Mn) x 1000), $\leq$ 0.74 or $\leq$ 0.72, or $\leq$ 0.70, or $\leq$ 0.68, or $\leq$ 0.66, or $\leq$ 0.64. In one embodiment, or a combination of two or more embodiments, each described herein, the second composition has a Rheology Parameter. ((RR/Mn) x 1000), $\geq$ 0.62, or $\geq$ 0.64, or $\geq$ 0.66, or $\geq$ 0.68, or $\geq$ 0.70, or $\geq$ 0.72, or $\geq$ 0.74, or $\geq$ 0.76, or $\geq$ 0.78, or $\geq$ 0.80. In a further embodiment, the second composition has a Rheology Parameter, ((RR/Mn) x 1000), $\leq$ 1.90, or $\leq$ 1.80, or $\leq$ 1.70, or $\leq$ 1.60.

In one embodiment, or a combination of two or more embodiments, each described herein, the first composition has a RR/MWD ratio $\geq$ 9.00, or $\geq$ 9.20, or $\geq$ 9.40, or $\geq$ 9.60, or $\geq$ 9.80, or $\geq$ 10.0, or $\geq$ 10.2, or $\geq$ 10.4, or $\geq$ 10.6, or $\geq$ 10.8, or $\geq$ 11.0. In a further embodiment, the first composition has a RR/MWD ratio $\leq$ 15.0, or $\leq$ 14.8, or $\leq$ 14.6, or $\leq$ 14.4, or $\leq$ 14.2, or $\leq$ 14.0, or $\leq$ 13.8, or $\leq$ 13.6, or $\leq$ 13.4, or $\leq$ 13.2, or $\leq$ 13.0. In one embodiment, or a combination of two or more embodiments, each described herein, the second composition has a RR/MWD ratio $\geq$ 4.00, or $\geq$ 4.20, or $\geq$ 4.40, or $\geq$ 4.60, or $\geq$ 4.80, or $\geq$ 5.00, or $\geq$ 5.10, or $\geq$ 5.20, or $\geq$ 5.30. In a further embodiment, the second composition has a RR/MWD ratio $\leq$ 7.00, or $\leq$ 6.80, or $\leq$ 6.60, or $\leq$ 6.40, or $\leq$ 6.20, or $\leq$ 6.00, or $\leq$ 5.90, or $\leq$ 5.80.

In one embodiment, or a combination of two or more embodiments, each described herein, the first composition has a molecular weight distribution MWD $\geq$ 2.40, or $\geq$ 2.50, or $\geq$ 2.60, or $\geq$ 2.70, or $\geq$ 2.80, or $\geq$ 2.90, or $\geq$ 3.00, or $\geq$ 3.10, or $\geq$ 3.20. In a further embodiment, the first composition has a molecular weight distribution MWD $\leq$ 4.40, or $\leq$ 4.30, or $\leq$ 4.20, or $\leq$ 4.10, or $\leq$ 4.00, or $\leq$ 3.80, or $\leq$ 3.60. In one embodiment, or a combination of two or more embodiments, each described herein, the second composition has a molecular weight distribution MWD $\geq$ 4.00, or $\geq$ 4.10, or $\geq$ 4.20, or $\geq$ 4.30, or $\geq$ 4.40, or $\geq$ 4.50. In a further embodiment, the second composition has a molecular weight distribution MWD $\leq$ 7.60, or $\leq$ 7.50, or $\leq$ 7.40, or $\leq$ 7.30, or $\leq$ 7.20, or $\leq$ 7.00.

In one embodiment, or a combination of two or more embodiments, each described herein, for the first composition, the first ethylene/alpha-olefin/nonconjugated polyene interpolymer (first interpolymer) is a first EPDM and the second ethylene/alpha-olefin/nonconjugated polyene interpolymer (second interpolymer) is a second EPDM. In a further embodiment, the nonconjugated polyene of the first interpolymer is ENB; and the nonconjugated polyene of the second interpolymer is ENB.

In one embodiment, or a combination of two or more embodiments, each described herein, for the second composition, the third ethylene/alpha-olefin/nonconjugated polyene interpolymer (third inter-polymer) is a third EPDM and the fourth ethylene/alpha-olefin/nonconjugated polyene interpolymer (fourth interpolymer) is a fourth EPDM. In a further embodiment, the nonconjugated polyene of the third interpolymer is ENB; and the nonconjugated polyene of the fourth interpolymer is ENB.

In one embodiment, or a combination of two or more embodiments, each described herein, the first composition comprises $\geq$ 90.0 wt%, or $\geq$ 92.0 wt%, or $\geq$ 94.0 wt%, or $\geq$ 96.0 wt%, or $\geq$ 98.0 wt%, or $\geq$ 99.0 wt%, or $\geq$ 99.5 wt%, of the first interpolymer and the second interpolymer, based on the weight of the first composition. In a further embodiment, the first composition comprises $\leq$ 100.0 wt%, or $\leq$ 99.9 wt%, or $\leq$ 99.8 wt%, of the first interpolymer and the second interpolymer, based on the weight of the first composition. In one embodiment, or a combination of two or more embodiments, each described herein, the second composition comprises $\geq$ 90.0 wt%, or $\geq$ 92.0 wt%, or $\geq$ 94.0 wt%, or $\geq$ 96.0 wt%, or $\geq$ 98.0 wt%, or $\geq$ 99.0 wt%, or $\geq$ 99.5 wt%, of the third interpolymer and the fourth interpolymer, based on the weight of the second composition. In a further embodiment, the second composition comprises $\leq$ 100.0 wt%, or $\leq$ 99.9 wt%, or $\leq$ 99.8 wt%, of the third interpolymer and the fourth interpolymer, based on the weight of the second composition.

In one embodiment, or a combination of two or more embodiments, each described herein, the composition has a ratio $\{[RR]_{First\ Composition} / [RR]_{Second\ Composition}\} \geq 0.90$, or $\geq 0.92$, or $\geq 0.94$, or $\geq 0.96$, or $\geq 0.98$, or $\geq 1.00$. In a further embodiment, the composition has a ratio $\{[RR]_{First\ Composition} / [RR]_{Second\ Composition}\} \leq 1.80$, or $\leq 1.78$, or $\leq 1.76$, or $\leq 1.74$, $\leq$ or 1.72, or $\leq$ 1.70. In one embodiment, or a combination of two or more embodiments, each described herein, the composition has a ratio $\{[MWD]_{First\ Composition} / [MWD]_{Second\ Composition}\} \geq 0.400$, or $\geq 0.420$, or $\geq 0.440$, or $\geq 0.460$, or $\geq 0.480$. In a further embodiment, the composition has a ratio $\{[MWD]_{First\ Composition} / [MWD]_{Second\ Composition}\} \leq 0.900$, or $\leq 0.880$, or $\leq 0.860$, or $\leq 0.840$, $\leq$ or 0.820, or $\leq$ 0.800, or $\leq$ or 0.780.

In one embodiment, or a combination of two or more embodiments, each described herein, the composition further comprises a calcined filler formed from a filler composition comprising a kaolinite. In a further embodiment, the filler composition further comprises a silica. In one embodiment, or a combination of two or more embodiments, each described herein, the composition further comprises carbon black.

The inventive composition may comprise a combination of two or more embodiments, each described herein. The first and second compositions may each, independently, comprise a combination of two or more embodiments, each described herein. Each ethylene/alpha-olefin/non-conjugated polyene interpolymer may each, independently, comprise a combination of two or more embodiments, each described herein.

## Ethylene/Alpha-Olefin/Nonconjugated Polyene Interpolymers

Each of the first, second, third and fourth ethylene/alpha-olefin/nonconjugated polyene interpolymers, each as described herein, independently comprise, in polymerize form, ethylene, an alpha-olefin, and a nonconjugated polyene. The alpha-olefin may be either an aliphatic or an aromatic compound. The alpha-olefin is preferably a C3-C20 aliphatic compound, preferably a C3-C16 aliphatic compound, and more preferably a C3-C10 aliphatic compound. Preferred C3-C10 aliphatic alpha-olefins include propylene, 1-butene, 1-hexene, 1-octene and 1-decene, and more preferably propylene. In one embodiment, or a combination of two or more embodiments, each described herein, each interpolymer is independently an ethylene/propylene/nonconjugated diene (EPDM) terpolymer. In a further embodiment, each diene is ENB.

Suitable examples of nonconjugated polyenes include the C4-C40 nonconjugated dienes. Illustrative nonconjugated polyenes include straight chain acyclic dienes, such as 1,4-hexadiene and 1,5-heptadiene; branched chain acyclic dienes, such as 5-methyl-1,4-hexadiene, 2-methyl-1,5-hexadiene, 6-methyl-1,5-heptadiene, 7-methyl-1,6-octadiene, 3,7-dimethyl-1,6-octadiene, 3,7-dimethyl-1,7-octadiene, 5,7-dimethyl-1,7-octadiene, 1,9-deca-diene, and mixed isomers of dihydromyrcene; single ring alicyclic dienes such as 1,4-cyclohexadiene, 1,5-cyclooctadiene and 1,5-cyclododecadiene; multi-ring alicyclic fused and bridged ring dienes, such as tetrahydroindene, methyl tetrahydroindene; alkenyl, alkylidene, cycloalkenyl and cycloalkylidene norbornenes such as 5-methylene-2-norbornene (MNB), 5-ethylidene-2-norbornene (ENB), 5-vinyl-2-norbornene (VNB), 5-propenyl-2-norbornene, 5-isopropylidene-2-norbornene, 5-(4-cyclopentenyl)-2-norbornene, and 5-cyclohexylidene-2-norbornene. The polyene is preferably a nonconjugated diene selected from ENB, VNB, dicyclopentadiene, 1,4-hexadiene, or 7-methyl-1,6-octadiene, and preferably, ENB, VNB, dicyclopentadiene or 1,4-hexadiene, more preferably ENB, VNB or dicyclopentadiene.

## Crosslinking Agents, Oils and Other Additives

Crosslinking agents include, but are not limited to, sulfur-containing compounds, such as elemental sulfur, 4,4'-dithiodimorpholine, thiuram di-and polysulfides, alkylphenol disulfides, and 2-morpholino-dithiobenzothiazole; and peroxides, such as di-tertbutyl peroxide, tert-butylcumyl peroxide, dicumyl peroxide, 2,5-dimethyl-2,5-di-(tertbutylperoxy) hexane, di-(tertbutylperoxyisopropyl) benzene, tertbutyl peroxybenzoate and 1,1-di-(tertbutylperoxy)-3,3,5-trimethylcyclohexane. Sulfur can be a crystalline elemental sulfur or an amorphous elemental sulfur, and either type can be in pure form or supported on an inert carrier. An example of a supported sulfur is RHENOGRAN S-80 (80% S and 20% inert carrier) from Rhein Chemie. The sulfur containing compounds are the preferred crosslinking agents.

Oils include, but are not limited to, paraffin oils, naphthenic oils and polyalkylbenzene oils. In one embodiment, or a combination of two or more embodiments, each described herein, the oil is selected from the group consisting of nonaromatic oils, paraffinic oils, naphthenic oils, and combinations thereof. Suitable oils include SUNPAR 2280, PARALUX 6001, HYDROBRITE 550, and CALSOL 5550, and preferably SUNPAR 2280.

An inventive composition may comprise one or more additional additives. Suitable additives include, but are not limited to, fillers, stabilizers (for example, antioxidants, antiozonants, UV stabilizers), flame retardants, colorants or pigments, and combinations thereof. Fillers include, but are not limited to, calcined fillers, carbon black (for example, SPHERON 6000A, SPHERON 5000A, SPHERON 6400A, and THERMAX N-990), silicates of aluminum, magnesium, calcium; natural fibers, synthetic fibers, and the like. An inventive composition preferably comprises at least one calcined filler and carbon black. Some stabilizers include, but are not limited to, hindered phenols, bisphenols, and thiobisphenols, and substituted hydroquinones. Typically, one or more stabilizers, in "ppm" amounts, are added to a polymer or a polymer composition.

In one embodiment, or a combination of two or more embodiments, each described herein, an inventive composition further comprises a thermoplastic polymer, different from each of the first through fourth interpolymers, independently, in one or more features, such as monomer(s) types and/or amounts, Mn, Mw, Mz, MWD, Mooney Viscosity, V0.1, V100, RR, or any combination thereof. Polymers include, but not limited to, ethylene-based polymers, propylene-base polymers, and olefin multi-block interpolymers. Suitable ethylenebase polymers include, but are not limited to, high density polyethylene (HDPE), linear low density polyethylene (LLDPE), very low density polyethylene (VLDPE), ultra-low density polyethylene (ULDPE), homogeneously branched linear ethylene polymers, and homogeneously branched substantially linear ethylene polymers (that is homogeneously branched, long chain branched ethylene polymers). Suitable propylene-base polymers include, but are not limited to, polypropylene homopolymers and propylene/ethylene copolymers.

DEFINITIONS

Unless stated to the contrary, implicit from the context, or customary in the art, all parts and percents are based on weight, and all test methods are current as of the filing date of this disclosure.

The term "composition," as used herein, includes a mixture of materials, which comprise the composition, as well as reaction products and decomposition products formed from the materials of the composition. Any reaction product or decomposition product is typically present in trace or residual amounts.

The term "polymer," as used herein, refers to a polymeric compound prepared by polymerizing monomers, whether of the same or a different type. The generic term polymer thus includes the term homopolymer (employed to refer to polymers prepared from only one type of monomer, with the understanding that trace amounts of impurities can be incorporated into the polymer structure), and the term interpolymer as defined hereinafter. Trace amounts of impurities, such as catalyst residues, can be incorporated into and/or within the polymer.

The term "interpolymer," as used herein, refers to polymers prepared by the polymerization of at least two different types of monomers. The term interpolymer thus includes the term copolymer (employed to refer to polymers prepared from two different types of monomers) and polymers prepared from more than two different types of monomers.

The term "propylene-based polymer," as used herein, refers to a polymer that comprises, in polymerized form, a majority weight percent of propylene (based on the weight of the polymer), and optionally may comprise one or more comonomers.

The term "ethylene-based polymer," as used herein, refers to a polymer that comprises, in polymerized form, 50 wt% or a majority weight percent of ethylene (based on the weight of the polymer), and optionally may comprise one or more comonomers.

The term "ethylene/alpha-olefin/nonconjugated polyene interpolymer," as used herein, refers to an interpolymer that comprises, in polymerized form, ethylene, an alpha-olefin, and a nonconjugated polyene. In one embodiment, the "ethylene/alpha-olefin/nonconjugated polyene interpolymer," comprises, in polymerized form, 50 wt% or a majority weight percent of ethylene (based on the weight of the interpolymer). The term "ethylene/a-olefin/noncomjugated diene interpolymer," as used herein, refers to an interpolymer that comprises, in polymerized form, ethylene, an alpha-olefin, and a nonconjugated diene. In one embodiment, the "ethylene/alpha-olefin/nonconjugated diene interpolymer," comprises, in polymerized form, 50 wt% or a majority weight percent of ethylene (based on the weight of the interpolymer).

The term, "ethylene/alpha-olefin copolymer," as used herein, refers to a copolymer that comprises, in polymerized form, 50 wt% or a majority amount of ethylene monomer (based on the weight of the copolymer), and an alpha-olefin, as the only two monomer types.

The term "calcined," as used herein, in reference to fillers, refers to the heat treatment of a filler, which treatment takes place at a temperature $\geq 600°C$, and typically up to a temperature $\leq 1050°C$. Such a heat treatment may take place in a furnace. The filler may be heated so to oxidize, remove moisture, and/or reduce to a loose state (calx), but not to melt. Typically, the calcination process removes the crystallization water and crystallinity of a hydrous material.

The terms "comprising," "including," "having," and their derivatives, are not intended to exclude the presence of any additional component, step or procedure, whether the same is specifically disclosed. In order to avoid any doubt, all compositions claimed through use of the term "comprising" may include any additional additive, adjuvant, or compound, whether polymeric or otherwise, unless stated to the contrary. In contrast, the term, "consisting essentially of" excludes from the scope of any succeeding recitation any other component, step or procedure, excepting those that are not essential to operability. The term "consisting of" excludes any component, step or procedure, not specifically delineated or listed.

**Listing of Some Embodiments**

a) A composition comprising a first composition and a second composition, and

wherein the first composition comprises a first ethylene/alpha-olefin/nonconjugated polyene interpolymer (first interpolymer) and a second ethylene/alpha-olefin/nonconjugated polyene interpolymer (second interpolymer); and
wherein the second composition comprises a third ethylene/alpha-olefin/nonconjugated polyene interpolymer (third interpolymer) and a fourth ethylene/alpha-olefin/nonconjugated polyene interpolymer (fourth interpolymer); and
wherein the first composition has a Mooney Viscosity (ML(1+4), 125°C) $\geq$ 50 and (ML(1+4), 125°C) $\leq$ 84, and a Rheology Parameter ((RR/Mn) x 1000) $\geq$ 0.50 and ((RR/Mn) x 1000) $\leq$ 0.76;
wherein the second composition has a Mooney Viscosity (ML(1+4), 125°C) < 50, and a Rheology Parameter ((RR/Mn) x 1000) $\geq$ 0.60 and ((RR/Mn) x 1000) $\leq$ 2.00.

b) The composition of a) above, where the first composition has a Rheology Parameter, ((RR/Mn) x 1000), $\geq$ 0.52, or $\geq$ 0.54, or $\geq$ 0.56. or $\geq$ 0.58, or $\geq$ 0.60.
c) The composition of a) or b) above, where the first composition has a Rheology Parameter, ((RR/Mn) x 1000), $\leq$ 0.74 or $\leq$ 0.72, or $\leq$ 0.70, or $\leq$ 0.68, or $\leq$ 0.66, or $\leq$ 0.64.
d) The composition of any one of a)-c) [a) through c)] above, where the second composition has a Rheology Parameter, ((RR/Mn) x 1000), $\geq$ 0.62, or $\geq$ 0.64, or $\geq$ 0.66, or $\geq$ 0.68, or $\geq$ 0.70, or $\geq$ 0.72, or $\geq$ 0.74, or $\geq$ 0.76, or $\geq$ 0.78, or $\geq$ 0.80.
e) The composition of any one of a)-d) above, where, the second composition has a Rheology Parameter, ((RR/Mn) x 1000) $\leq$ 1.90, or $\leq$ 1.80, or $\leq$ 1.70, or $\leq$ 1.60.
f) The composition of any one of a)-e) above, where the first composition has a Mooney Viscosity (ML(1+4), 125°C) $\geq$ 52, or $\geq$ 54, or $\geq$ 56, or $\geq$ 58, or $\geq$ 60, or $\geq$ 62, or $\geq$ 64, or $\geq$ 66.
g) The composition of any one of a)-f) above, where, the first composition has a Mooney Viscosity (ML(1+4), 125°C) $\leq$ 82, or $\leq$ 80, or $\leq$ 78, or $\leq$ 76, or $\leq$ 74, or $\leq$ 72.
h) The composition of any one of a)-g) above, where the second composition has a Mooney Viscosity (ML(1+4), 125°C) $\geq$ 10, or $\geq$ 12, or $\geq$ 14, or $\geq$ 16, or $\geq$ 18, or $\geq$ 20, or $\geq$ 22, or $\geq$ 24.
i) The composition of any one of a)-h) above, where the second composition has a Mooney Viscosity (ML(1+4), 125°C) $\leq$ 48, or $\leq$ 46, or $\leq$ 44, or $\leq$ 42, or $\leq$ 40, or $\leq$ 38, or $\leq$ 36, or $\leq$ 34.
j) The composition of any one of a)-i) above, where the first composition has a RR/MWD ratio $\geq$ 9.00, or $\geq$ 9.20, or $\geq$ 9.40, or $\geq$ 9.60, or $\geq$ 9.80, or $\geq$ 10.0, or $\geq$ 10.2, or $\geq$ 10.4, or $\geq$ 10.6, or $\geq$ 10.8, or $\geq$ 11.0.
k) The composition of any one of a)-j) above, where the first composition has a RR/MWD ratio $\leq$ 15.0, or $\leq$ 14.8, or $\leq$ 14.6, or $\leq$ 14.4, or $\leq$ 14.2, or $\leq$ 14.0, or $\leq$ 13.8, or $\leq$ 13.6, or $\leq$ 13.4, or $\leq$ 13.2, or $\leq$ 13.0.
l) The composition of any one of a)-k) above, where the second composition has a RR/MWD ratio $\geq$ 4.00, or $\geq$ 4.20, or $\geq$ 4.40, or $\geq$ 4.60, or $\geq$ 4.80, or $\geq$ 5.00, or $\geq$ 5.10, or $\geq$ 5.20, or $\geq$ 5.30.
m) The composition of any one of a)-1) above, where the second composition has a RR/MWD ratio $\leq$ 7.00, or $\leq$ 6.80, or $\leq$ 6.60, or $\leq$ 6.40, or $\leq$ 6.20, or $\leq$ 6.00, or $\leq$ 5.90, or $\leq$ 5.80.
n) The composition of any one of a)-m) above, where the first composition has a molecular weight distribution MWD $\geq$ 2.40, or $\geq$ 2.50, or $\geq$ 2.60, or $\geq$ 2.70, or $\geq$ 2.80, or $\geq$ 2.90, or $\geq$ 3.00, or $\geq$ 3.10, or $\geq$ 3.20.
o) The composition of any one of a)-n) above, where the first composition has a MWD $\leq$ 4.40, or $\leq$ 4.30, or $\leq$ 4.20, or $\leq$ 4.10, or $\leq$ 4.00, or $\leq$ 3.80, or $\leq$ 3.60.
p) The composition of any one of a)-o) above, where the second composition has a MWD $\geq$ 4.00, or $\geq$ 4.10, or $\geq$ 4.20, or $\geq$ 4.30, or $\geq$ 4.40, or $\geq$ 4.50.
q) The composition of any one of a)-p) above, where the second composition has a MWD $\leq$ 7.60, or $\leq$ 7.50, or $\leq$ 7.40, or $\leq$ 7.30, or $\leq$ 7.20, or $\leq$ 7.00.
r) The composition of any one of a)-q) above, where the first composition has a molecular weight ratio Mz/Mn $\geq$ 9.00, or $\geq$ 9.20, or $\geq$ 9.40, or $\geq$ 9.60, or $\geq$ 9.80, or $\geq$ 10.0, or $\geq$ 10.2, or $\geq$ 10.4, or $\geq$ 10.6.

s) The composition of any one of a)-r) above, where the first composition has a Mz/Mn ≤ 14.0, or ≤ 13.8, or ≤ 13.6, or ≤ 13.4, or ≤ 13.2, or ≤ 13.0.

t) The composition of any one of a)-s) above, where the second composition has a Mz/Mn ≥ 10.0, or ≥ 10.5, or ≥ 11.0, or ≥ 11.5, or ≥ 12.0, or ≥ 12.5, or ≥ 13.0.

u) The composition of any one of a)-t) above, where the second composition has a Mz/Mn ≤ 30.0, or ≤ 29.0, or ≤ 28.0, or ≤ 27.0, or ≤ 26.0, or ≤ 25.0.

v) The composition of any one of a)-u) above, where the first composition has a molecular weight ratio Mz/Mw ≥ 3.00, or ≥ 3.05, or ≥ 3.10, or ≥ 3.15, or ≥ 3.20, or ≥ 3.25.

w) The composition of any one of a)-v) above, where the first composition has a Mz/Mw ≤ 4.40, or ≤ 4.30, or ≤ 4.20, or ≤ 4.10, or ≤ 4.00, or ≤ 3.90.

x) The composition of any one of a)-w) above, where the second composition has a Mz/Mw ≥ 2.40, or ≥ 2.50, or ≥ 2.60, or ≥ 2.70, or ≥ 2.80, or ≥ 2.90.

y) The composition of any one of a)-x) above, where the second composition has a Mz/Mw ≤ 4.40, or ≤ 4.30, or ≤ 4.20, or ≤ 4.10, or ≤ 4.00, or ≤ 3.90, or ≤ 3.80, or ≤ 3.70.

z) The composition of any one of a)-y) above, where the first composition has a ratio $\{[(RR/Mn) \times 1000]_{First\ composition} / [(RR/Mn) \times 1000]_{First\ Interpolymer}\} \geq 1.20$, or ≥ 1.25, or ≥ 1.30, or ≥ 1.35, or ≥ 1.40, or ≥ 1.45, or ≥ 1.50.

aa) The composition of any one of a)-z) above, where the first composition has a ratio $\{[(RR/Mn) \times 1000]_{First\ composition} / [(RR/Mn) \times 1000]_{First\ Interpolymer}\} \leq 2.10$, or ≤ 2.05, or ≤ 2.00, or ≤ 1.95, or ≤ 1.90, or ≤ 1.85.

**bb)** The composition of any one of a)-aa) above, where the second composition has a ratio $\{[(RR/Mn) \times 1000]_{Second\ composition} / [(RR/Mn) \times 1000]_{Third\ Interpolymer}\} \geq 2.20$, or ≥ 2.25, or ≥ 2.30, or ≥ 2.35, or ≥ 2.40, or ≥ 2.45, or ≥ 2.50.

cc) The composition of any one of a)-bb) above, where the second composition has a ratio $\{[(RR/Mn) \times 1000]_{Second\ composition} / [(RR/Mn) \times 1000]_{Third\ Interpolymer}\} \leq 4.00$, or ≤ 3.90, or ≤ 3.85, or ≤ 3.80, or ≤ 3.75, or ≤ 3.70, or ≤ 3.65.

dd) The composition of any one of a)-cc) above, where the first composition has a ratio $\{[RR/MWD]_{First\ Interpolymer} / [RR/MWD]_{First\ composition}\} \geq 1.60$, or ≥ 1.65, or ≥ 1.70, or ≥ 1.75, or ≥ 1.80, or ≥ 1.85.

ee) The composition of any one of a)-dd) above, where the first composition has a ratio $\{[RR/MWD]_{First\ Interpolymer} / [RR/MWD]_{First\ composition}\} \leq 2.25$, or ≤ 2.20, or ≤ 2.15, or ≤ 2.10, or ≤ 2.05, or ≤ 2.00.

ff) The composition of any one of a)-ee) above, where the second composition has a ratio $\{[RR/MWD]_{Third\ Interpolymer} / [RR/MWD]_{Second\ composition}\} \geq 2.75$, or ≥ 2.80, or ≥ 2.85, or ≥ 2.90, or ≥ 2.95, or ≥ 3.00.

gg) The composition of any one of a)-ff) above, where the second composition has a ratio $\{[RR/MWD]_{Third\ Interpolymer} / [RR/MWD]_{Second\ composition}\} \leq 5.30$, or ≤ 5.25, or ≤ 5.20, or ≤ 5.15, or ≤ 5.10, or ≤ 5.05.

hh) The composition of any one of a)-gg) above, where the first composition has a ratio $\{[MWD]_{First\ composition} / [MWD]_{First\ Interpolymer}\} \geq 1.25$, or ≥ 1.30, or ≥ 1.35, or ≥ 1.40.

ii) The composition of any one of a)-hh) above, where the first composition has a ratio $\{[MWD]_{First\ composition} / [MWD]_{First\ Interpolymer}\} \leq 1.80$, or ≤ 1.75, or ≤ 1.70, or ≤ 1.65.

jj) The composition of any one of a)-ii) above, where the second composition has a ratio $\{[MWD]_{Second\ composition} / [MWD]_{Third\ Interpolymer}\} \geq 1.85$, or ≥ 1.90, or ≥ 1.95, or ≥ 2.00.

kk) The composition of any one of a)-jj) above, where the second composition has a ratio $\{[MWD]_{Second\ composition} / [MWD]_{Third\ Interpolymer}\} \leq 3.25$, or ≤ 3.20, or ≤ 3.15, or ≤ 3.10.

ll) The composition of any one of a)-kk) above, where the first composition has a ratio $\{[Mn]_{First\ Interpolymer} / [Mn]_{First\ composition}\} \geq 1.80$, or ≥ 1.85, or ≥ 1.90, or ≥ 1.95.

mm) The composition of any one of a)-ll) above, where the first composition has a ratio $\{[Mn]_{First\ Interpolymer} / [Mn]_{First\ composition}\} \leq 2.40$, or ≤ 2.35, or ≤ 2.30, or ≤ 2.25.

nn) The composition of any one of a)-mm) above, where the second composition has a ratio $\{[Mn]_{Third\ Interpolymer} / [Mn]_{Second\ composition}\} \geq 3.55$, or ≥ 3.60, or ≥ 3.65, or ≥ 3.70.

oo) The composition of any one of a)-nn) above, where the second composition has a ratio $\{[Mn]_{Third\ Interpolymer} / [Mn]_{Second\ composition}\} \leq 6.20$, or ≤ 6.15, or ≤ 6.10, or ≤ 6.05.

pp) The composition of any one of a)-oo) above, where the first composition has a ratio $\{[Mw]_{First\ Interpolymer} / [Mw]_{First\ composition}\} \geq 1.20$. or ≥ 1.25, or ≥ 1.30, or ≥ 1.35.

qq) The composition of any one of a)-pp) above, where the first composition has a ratio $\{[Mw]_{First\ Interpolymer} / [Mw]_{First\ composition}\} \leq 1.55$. or ≤ 1.50, or ≤ 1.45, or ≤ 1.40.

rr) The composition of any one of a)-qq) above, where the second composition has a ratio $\{[Mw]_{Third\ Inerpolymer} / [Mw]_{Second\ composition}\} \geq 1.65$, or ≥ 1.70, or ≥ 1.75, or ≥ 1.80.

ss) The composition of any one of a)-rr) above, where the second composition has a ratio $\{[Mw]_{Third\ Interpolymer} / [Mw]_{Secondcomposition}\} \leq 2.15$, or ≤ 2.10, or ≤ 2.05, or ≤ 2.00.

tt) The composition of any one of a)-ss) above, where the first ethylene/alpha-olefin/nonconjugated polyene interpolymer (first interpolymer) is a first EPDM and the second ethylene/alpha-olefin/nonconjugated polyene interpolymer (second interpolymer) is a second EPDM.

uu) The composition of any one of a)-tt) above, where the nonconjugated polyene of the first interpolymer is ENB, and the nonconjugated polyene of the second interpolymer is ENB.

vv) The composition of uu) above, where the average of the ENB content of the first interpolymer and the ENB content of the second interpolymer is $\geq 7.0$ wt%, or $\geq 7.2$ wt%, or $\geq 7.4$ wt%, or $\geq 7.6$ wt%, or $\geq 7.8$ wt%, or $\geq 8.0$ wt%, or $\geq 8.2$ wt%, or $\geq 8.4$ wt%, or $\geq 8.6$ wt%, or $\geq 8.8$ wt%. Each wt% is based on the sum weight of the first interpolymer and the second interpolymer. It is understood that the ENB content is in polymerized form.

ww) The composition of uu) or vv) above, where the average of the ENB content of the first interpolymer and the ENB content of the second interpolymer is $\leq 12.0$ wt%, or $\leq 11.5$ wt%, or $\leq 11.0$ wt%, or $\leq 10.5$ wt%, or $\leq 10.0$ wt%, or $\leq 9.5$ wt%.

xx) The composition of any one of a)-ww) above, where the third ethylene/alpha-olefin/nonconjugated polyene interpolymer (third interpolymer) is a third EPDM, and the fourth ethylene/alpha-olefin/nonconjugated polyene interpolymer (fourth interpolymer) is a fourth EPDM.

yy) The composition of any one of a)-xx) above, where the nonconjugated polyene of the third interpolymer is ENB, and the nonconjugated polyene of the fourth interpolymer is ENB.

zz) The composition of yy) above, where the average of the ENB content of the third interpolymer and the ENB content of the fourth interpolymer is $\geq 4.0$ wt%, or $\geq 4.5$ wt%, or $\geq 5.0$ wt%, or $\geq 5.5$ wt%, or $\geq 6.0$ wt%, or $\geq 6.5$ wt%. Each wt% is based on the sum weight of the third interpolymer and the fourth interpolymer. It is understood that the ENB content is in polymerized form.

aaa) The composition of yy) or zz) above, where the average of the ENB content of the third interpolymer and the ENB content of the fourth interpolymer is $\leq 9.0$ wt%, or $\leq 8.5$ wt%, or $\leq 8.0$ wt%, or $\leq 7.5$ wt%, or $\leq 7.0$ wt%.

bbb) The composition of any one of a)-aaa) above, where the average of the C2 (ethylene) content of the first interpolymer and the C2 (ethylene) content of the second interpolymer is $\geq 50.0$ wt%, or $\geq 52.0$ wt%, or $\geq 54.0$ wt%, or $\geq 56.0$ wt%, or $\geq 58.0$ wt%. Each wt% is based on the sum weight of the first interpolymer and the second interpolymer. It is understood that the C2 (ethylene) content is in polymerized form.

ccc) The composition of any one of a)-bbb) above, where the average of the C2 (ethylene) content of the first interpolymer and the C2 (ethylene) content of the second interpolymer is $\leq 80.0$ wt%, or $\leq 78.0$ wt%, or $\leq 76.0$ wt%, or $\leq 74.0$ wt%, or $\leq 72.0$ wt%, or $\leq 70.0$ wt%.

ddd) The composition of any one of a)-ccc) above, where the average of the C2 (ethylene) content of the third interpolymer and the C2 (ethylene) content of the fourth interpolymer is $\geq 60.0$ wt%, or $\geq 62.0$ wt%, or $\geq 64.0$ wt%, or $\geq 66.0$ wt%, or $\geq 68.0$ wt%, or $\geq 70.0$ wt%.

eee) The composition of any one of a)-ddd) above, where the average of the C2 (ethylene) content of the third interpolymer and the C2 (ethylene) content of the fourth interpolymer is $\leq 84.0$ wt%, or $\leq 82.0$ wt%, or $\leq 80.0$ wt%, or $\leq 78.0$ wt%, or $\leq 76.0$ wt%, or $\leq 74.0$ wt%.

fff) The composition of any one of a)-eee) above, where the first composition comprises $\geq 90.0$ wt%, or $\geq 92.0$ wt%, or $\geq 94.0$ wt%, or $\geq 96.0$ wt%, or $\geq 98.0$ wt%, or $\geq 99.0$ wt%, or $\geq 99.5$ wt%, of the first interpolymer and the second interpolymer, based on the weight of the first composition.

ggg) The composition of any one of a)-fff) above, where the first composition comprises $\leq 100.0$ wt%, or $\leq 99.9$ wt%, or $\leq 99.8$ wt%, of the first interpolymer and the second interpolymer, based on the weight of the first composition.

hhh) The composition of any one of a)-ggg) above, where the second composition comprises $\geq 90.0$ wt%, or $\geq 92.0$ wt%, or $\geq 94.0$ wt%, or $\geq 96.0$ wt%, or $\geq 98.0$ wt%, or $\geq 99.0$ wt%, or $\geq 99.5$ wt%, of the third interpolymer and the fourth interpolymer, based on the weight of the second composition.

iii) The composition of any one of a)-hhh) above, where the second composition comprises $\leq 100.0$ wt%, or $\leq 99.9$ wt%, or $\leq 99.8$ wt%, of the third interpolymer and the fourth interpolymer, based on the weight of the second composition.

jjj) The composition of any one of a)-iii) above, where the first composition has a number average molecular weight Mn $\geq 40,000$ g/mol, or $\geq 45,000$ g/mol, or $\geq 50,000$ g/mol, or $\geq 55,000$ g/mol, or $\geq 60,000$ g/mol.

kkk) The composition of any one of a)-jjj) above, where the first composition has a Mn $\leq 90,000$ g/mol, or $\leq 85,000$ g/mol, or $\leq 80,000$ g/mol, or $\leq 75,000$ g/mol, or $\leq 70,000$ g/mol.

lll) The composition of any one of a)-kkk) above, where the second composition has a Mn $\geq 10,000$ g/mol, or $\geq 12,000$ g/mol, or $\geq 14,000$ g/mol, or $\geq 16,000$ g/mol, or $\geq 18,000$ g/mol, or $\geq 20,000$ g/mol, or $\geq 22,000$ g/mol.

mmm) The composition of any one of a)-lll) above, where the second composition has a Mn $\leq 50,000$ g/mol, or $\leq 45,000$ g/mol, or $\leq 40,000$ g/mol, or $\leq 35,000$ g/mol, or $\leq 32,000$ g/mol.

nnn) The composition of any one of a)-mmm) above, where the first composition has a weight average molecular weight Mw $\geq 170,000$ g/mol, or $\geq 175,000$ g/mol, or $\geq 180,000$ g/mol, or $\geq 185,000$ g/mol, or $\geq 190,000$ g/mol, or $\geq 195,000$ g/mol, or $\geq 200,000$ g/mol.

ooo) The composition of any one of a)-nnn) above, where the first composition has a Mw $\leq 250,000$ g/mol, or $\leq 245,000$ g/mol, or $\leq 240,000$ g/mol, or $\leq 235,000$ g/mol, or $\leq 230,000$ g/mol, or $\leq 225,000$ g/mol.

ppp) The composition of any one of a)-ooo) above, where the second composition has a Mw $\geq 100,000$ g/mol, or $\geq$

105,000 g/mol, or ≥ 110,000 g/mol, or ≥ 115,000 g/mol, or ≥ 120,000 g/mol, or ≥ 125,000 g/mol, or ≥ 130,000 g/mol.

qqq) The composition of any one of a)-ppp) above, where the second composition has a Mw ≤ 200,000 g/mol, or ≤ 195,000 g/mol, or ≤ 190,000 g/mol, or ≤ 185,000 g/mol, or ≤ 180,000 g/mol, or ≤ 175,000 g/mol, or ≤ 170,000 g/mol.

rrr) The composition of any one of a)-qqq) above, where the first composition has a V0.1 (0.1 rad/s, 190°C) ≥ 100,000 Pa•s, or ≥ 115,000 Pa•s, or ≥ 120,000 Pa•s, or ≥ 125,000 Pa•s, or ≥ 130,000 Pa•s, or ≥ 135,000 Pa•s.

sss) The composition of any one of a)-rrr) above, where the first composition has a V0.1 (0.1 rad/s, 190°C) ≤ 180,000 Pa•s, or ≤ 175,000 Pa•s, or ≤ 170,000 Pa•s, or ≤ 165,000 Pa•s, or ≤ 160,000 Pa•s, or ≤ 155,000 Pa•s.

ttt) The composition of any one of a)-sss) above, where the second composition has a V0.1 (0.1 rad/s, 190°C) ≥ 30,000 Pa•s, or ≥ 35,000 Pa•s, or ≥ 40,000 Pa•s, or ≥ 45,000 Pa•s, or ≥ 50,000 Pa•s.

uuu) The composition of any one of a)-ttt) above, where the second composition has a V0.1 (0.1 rad/s, 190°C) ≤ 90,000 Pa•s, or ≤ 85,000 Pa•s, or ≤ 80,000 Pa•s, or ≤ 75,000 Pa•s, or ≤ 70,000 Pa•s.

vvv) The composition of any one of a)-uuu) above, where the first composition has a V100 (100 rad/s, 190°C) ≥ 1,000 Pa•s, or ≥ 1,500 Pa•s, or ≥ 2,000 Pa•s, or ≥ 2,500 Pa•s, or ≥ 3,000 Pa•s.

www) The composition of any one of a)-vvv) above, where the first composition has a V100 (100 rad/s, 190°C) ≤ 6,000 Pa•s, or ≤ 5,500 Pa•s, or ≤ 5,000 Pa•s, or ≤ 4,500 Pa•s, or ≤ 4,000 Pa•s.

xxx) The composition of any one of a)-www) above, where the second composition has a V100 (100 rad/s, 190°C) ≥ 500 Pa•s, or ≥ 1,000 Pa•s, or ≥ 1,200 Pa•s, or ≥ 1,500 Pa•s, or ≥ 1,700 Pa•s.

yyy) The composition of any one of a)-xxx) above, where the second composition has a V100 (100 rad/s, 190°C) ≤ 4,000 Pa•s, or ≤ 3,500 Pa•s, or ≤ 3,000 Pa•s, or ≤ 2,500 Pa•s, or ≤ 2,200 Pa•s.

zzz) The composition of any one of a)-yyy) above, where the first composition has a Rheology Ratio (RR) ≥ 30.0, or ≥ 32.0, or ≥ 34.0, or ≥ 36.0, or ≥ 38.0.

a4) The composition of any one of a)-zzz) above, where the first composition has a Rheology Ratio (RR) ≤ 50.0, or ≤ 48.0, or ≤ 46.0, or ≤ 44.0, ≤ or 42.0, or ≤ 40.0.

b4) The composition of any one of a)-a4) above, where the second composition has a Rheology Ratio (RR) ≥ 14.0, or ≥ 16.0, or ≥ 18.0, or ≥ 20.0, or ≥ 22.0, or ≥ 24.0.

c4) The composition of any one of a)-b4) above, where the second composition has a Rheology Ratio (RR) ≤ 50.0, or ≤ 48.0, or ≤ 46.0, or ≤ 44.0, ≤ or 42.0, or ≤ 40.0.

d4) The composition of any one of a)-c4) above, where the composition has a $\{[RR]_{First\ Composition}/[RR]_{Second\ Composition}\}$ ≥ 0.90, or ≥ 0.92, or ≥ 0.94, or ≥ 0.96, or ≥ 0.98, or ≥ 1.00.

e4) The composition of any one of a)-d4) above, where the composition has a $\{[RR]_{First\ Composition}/[RR]_{Second\ Composition}\}$ ≤ 1.80, or ≤ 1.78, or ≤ 1.76, or ≤ 1.74, ≤ or 1.72, or ≤ 1.70.

f4) The composition of any one of a)-e4) above, where the composition has a $\{[MWD]_{First\ Composition}/[MWD]_{Second\ Composition}\}$ ≥ 0.400, or ≥ 0.420, or ≥ 0.440, or ≥ 0.460, or ≥ 0.480.

g4) The composition of any one of a)-f4) above, where the composition has a ratio $\{[MWD]_{First\ Composition}/[MWD]_{Second\ Composition}\}$ ≤ 0.900, or ≤ 0.880, or ≤ 0.860, or ≤ 0.840, ≤ or 0.820, or ≤ 0.800, or ≤ or 0.780.

h4) The composition of any one of a)-g4) above, where the first composition and the second composition each, independently, has a "13C NMR % Peak Area," which is the { [(13C NMR peak area from 21.3 ppm to 22.0 ppm) divided by the (total integral area from 19.5 ppm to 22.0 ppm)] x 100}, that is ≥ 4.0%, or ≥ 5.0%, or ≥ 6.0%, or ≥ 7.0%, or ≥ 8.0%, or ≥ 9.0%, or ≥ 10.0%, or ≥ 11.0%, or ≥ 12.0%, as determined by 13C NMR.

i4) The composition of any one of a)-h4) above, where each composition, independently, has a "13C NMR % Peak Area," that is ≤ 30.0%, or ≤ 25.0%, or ≤ 20.0%.

j4) The composition of any one of a)-i4) above, where the first composition has a Tm value ≥ -10.0°C, or ≥ -8.0°C, or ≥ -6.0°C, or ≥ -4.0°C, or ≥ -2.0°C, or ≥ -1.0°C.

k4) The composition of any one of a)-j4) above, where the first composition has a Tm value ≤ 4.0°C, or ≤ 3.0°C, or ≤ 2.0°C, or ≤ 1.0°C, or ≤ 0.5°C, or ≤ 0.2°C.

l4) The composition of any one of a)-k4) above, where the first composition has a Tg value ≥ -58.0°C, or ≥ -56.0°C, or ≥ -54.0°C, or ≥ -52.0°C, or ≥ -50.0°C, or ≥ -48.0°C.

m4) The composition of any one of a)-l4) above, where the first composition has a Tg value ≤ -30.0°C, or ≤ -32.0°C, or ≤ -34.0°C, or ≤ -36.0°C, or ≤ -38.0°C, or ≤ -40.0°C.

n4) The composition of any one of a)-m4) above, where the first composition has a Tc value ≥ -24.0°C, or ≥ -22.0°C, or ≥ -20.0°C, or ≥ -18.0°C, or ≥ -16.0°C, or ≥ -14.0°C.

o4) The composition of any one of a)-n4) above, where the first composition has a Tc value ≤ -4.0°C, or ≤ -6.0°C, or ≤ -8.0°C, or ≤ -10.0°C, or ≤ -12.0°C.

p4) The composition of any one of a)-o4) above, where the first composition has a % crystallinity ≥ 1.0%, or ≥ 1.5%, or ≥ 2.0%, or ≥ 2.5%, or ≥ 3.0%.

q4) The composition of any one of a)-p4) above, where the first composition has a % crystallinity ≤ 7.0%, or ≤ 6.5%, or ≤ 6.0%, or ≤ 5.5%, or ≤ 5.0%.

r4) The composition of any one of a)-q4) above, where the second composition has a Tm value ≥ 50.0°C, or ≥ 52.0°C, or ≥ 54.0°C, or ≥ 56.0°C, or ≥ 58.0°C, or ≥ 60.0°C, or ≥ 62.0°C. s4) The composition of any one of a)-r4) above, where the second composition has a Tm value ≤ 80.0°C, or ≤ 78.0°C, or ≤ 76.0°C, or ≤ 74.0°C, or ≤ 72.0°C, or ≤ 70.0°C.

t4) The composition of any one of a)-s4) above, where the second composition has a Tg value ≥ -50.0°C, or ≥ -48.0°C, or ≥ -46.0°C, or ≥ -44.0°C, or ≥ -42.0°C, or ≥ -40.0°C.

u4) The composition of any one of a)-t4) above, where the second composition has a Tg value ≤ -10.0°C, or ≤ -12.0°C, or ≤ -14.0°C, or ≤ -16.0°C, or ≤ -18.0°C, or ≤ -20.0°C, or ≤ -22.0°C, or ≤ -24.0°C.

v4) The composition of any one of a)-u4) above, where the second composition has a Tc value ≥ 40.0°C, or ≥ 42.0°C, or ≥ 44.0°C, or ≥ 46.0°C, or ≥ 48.0°C, or ≥ 50.0°C.

w4) The composition of any one of a)-v4) above, where the second composition has a Tc ≤ 70.0°C, or ≤ 68.0°C, or ≤ 66.0°C, or ≤ 64.0°C, or ≤ 62.0°C, or ≤ 60.0°C, or ≤ 58.0°C.

x4) The composition of any one of a)-w4) above, where the second composition has a % crystallinity ≥ 8.0%, or ≥ 10.0%, or ≥ 12.0%, or ≥ 14.0%, or ≥ 16.0%.

y4) The composition of any one of a)-x4) above, where the second composition has a % crystallinity ≤ 30.0%, or ≤ 28.0%, or ≤ 26.0%, or ≤ 24.0%, or ≤ 22.0%, or ≤ 20.0°C.

z4) The composition of any one of a)-y4) above, where for the first composition, the first ethylene/alpha-olefin/non-conjugated polyene interpolymer (first interpolymer) has a Rheology Parameter, ((RR/Mn) x 1000) ≥ 0.10, or ≥ 0.15, or ≥ 0.20, or ≥ 0.25, or ≥ 0.30.

a5) The composition of any one of a)-z4) above, where the first interpolymer has a Rheology Parameter, ((RR/Mn) x 1000) ≤ 0.60, or ≤ 0.55, or ≤ 0.50, or ≤ 0.45.

b5) The composition of any one of a)-a5) above, where for the second composition, the third ethylene/alpha-olefin/nonconjugated polyene interpolymer (third interpolymer) has a Rheology Parameter, ((RR/Mn) x 1000) ≥ 0.10, or ≥ 0.15, or ≥ 0.20, or ≥ 0.25, or ≥ 0.30.

c5) The composition of any one of a)-b5) above, where the third interpolymer has a Rheology Parameter, ((RR/Mn) x 1000) ≤ 0.60, or ≤ 0.55, or ≤ 0.50, or ≤ 0.45.

d5) The composition of any one of a)-c5) above, where for the first composition, the first interpolymer has a RR/MWD ratio ≥ 10.0, or ≥ 12.0, or ≥ 14.0, or ≥ 16.0, or ≥ 18.0, or ≥ 20.0, or ≥ 22.0.

e5) The composition of any one of a)-d5) above, where the first interpolymer has a RR/MWD ratio ≤ 30.0, or ≤ 28.0, or ≤ 26.0, or ≤ 24.0.

f5) The composition of any one of a)-e5) above, where for the second composition, the third interpolymer has a RR/MWD ratio ≥ 6.00, or ≥ 8.00, or ≥ 10.0, or ≥ 12.0, or ≥ 14.0, or ≥ 16.0.

g5) The composition of any one of a)-f5) above, where the third interpolymer has a RR/MWD ratio ≤ 36.0, or ≤ 34.0, or ≤ 32.0, or ≤ 30.0, or ≤ 28.0.

h5) The composition of any one of a)-g5) above, where for the first composition, the first interpolymer has a molecular weight distribution MWD ≥ 1.90, or ≥ 1.95, or ≥ 2.00, or ≥ 2.05, or ≥ 2.10, or ≥ 2.15.

i5) The composition of any one of a)-h5) above, where the first interpolymer has a MWD ≤ 2.60, or ≤ 2.55, or ≤ 2.50, or ≤ 2.45, or ≤ 2.40, or ≤ 2.35.

j5) The composition of any one of a)-i5) above, where for the second composition, the third interpolymer has a molecular weight distribution MWD ≥ 1.90, or ≥ 1.95, or ≥ 2.00, or ≥ 2.05, or ≥ 2.10, or ≥ 2.15, or ≥ 2.20.

k5) The composition of any one of a)-j5) above, where the third interpolymer has a molecular weight distribution MWD ≤ 2.50, or ≤ 2.45, or ≤ 2.40, or ≤ 2.35, or ≤ 2.30.

l5) The composition of any one of a)-k5) above, where the first composition comprises ≥ 15.0 wt%, or ≥ 20.0 wt%, or ≥ 25.0 wt%, or ≥ 30.0 wt% of the first interpolymer, based on the weight of the first composition.

m5) The composition of any one of a)-l5) above, where the first composition comprises ≤ 50.0 wt%, ≤ 45.0 wt%, or ≤ 40.0 wt%, or ≤ 35.0 wt% of the first interpolymer, based on the weight of the first composition.

n5) The composition of any one of a)-m5) above, where the second composition comprises ≥ 15.0 wt%, or ≥ 20.0 wt%, or ≥ 25.0 wt%, or ≥ 30.0 wt% of the third interpolymer, based on the weight of the second composition.

o5) The composition of any one of a)-n5) above, where the second composition comprises ≤ 50.0 wt%, ≤ 45.0 wt%, or ≤ 40.0 wt%, or ≤ 35.0 wt% of the third interpolymer, based on the weight of the second composition.

p5) The composition of any one of a)-o5) above, where for the first composition, the first interpolymer has a number average molecular weight Mn ≥ 80,000 g/mol, or ≥ 90,000 g/mol, or ≥ 100,000 g/mol, or ≥ 110,000 g/mol, or ≥ 120,000 g/mol.

q5) The composition of any one of a)-p5) above, where the first interpolymer has a Mn ≤ 180,000 g/mol, or ≤ 170,000 g/mol, or ≤ 160,000 g/mol, or ≤ 150,000 g/mol.

r5) The composition of any one of a)-q5) above, where for the second composition, the third interpolymer has a number average molecular weight Mn ≥ 70,000 g/mol, or ≥ 80,000 g/mol, or ≥ 90,000 g/mol, or ≥ 100,000 g/mol, or ≥ 105,000 g/mol.

s5) The composition of any one of a)-r5) above, where the third interpolymer has a Mn ≤ 180,000 g/mol, or ≤ 170,000 g/mol, or ≤ 160,000 g/mol, or ≤ 150,000 g/mol.

t5) The composition of any one of a)-s5) above, where for the first composition, the first interpolymer has a weight average molecular weight Mw ≥ 250,000 g/mol, or ≥ 260,000 g/mol, or ≥ 270,000 g/mol, or ≥ 280,000 g/mol, or ≥ 290,000 g/mol.

u5) The composition of any one of a)-t5) above, where the first interpolymer has a Mw ≤ 350,000 g/mol, or ≤ 340,000 g/mol, or ≤ 330,000 g/mol, or ≤ 320,000 g/mol, or ≤ 310,000 g/mol.

v5) The composition of any one of a)-u5) above, where for the second composition, the third interpolymer has a weight average molecular weight Mw ≥ 210,000 g/mol, or ≥ 220,000 g/mol, or ≥ 230,000 g/mol, or ≥ 240,000 g/mol.

w5) The composition of any one of a)-v5) above, where the third interpolymer has a Mw ≤ 360,000 g/mol, or ≤ 350,000 g/mol, or ≤ 340,000 g/mol, or ≤ 330,000 g/mol, or ≤ 320,000 g/mol.

x5) The composition of any one of a)-w5) above, where for the first composition, the first interpolymer has a V0.1 (0.1 rad/s, 190°C) ≥ 300,000 Pa•s, or ≥ 310,000 Pa•s, or ≥ 320,000 Pa•s, or ≥ 330,000 Pa•s, or ≥ 340,000 Pa•s, or ≥ 350,000 Pa•s.

y5) The composition of any one of a)-x5) above, where the first interpolymer has a V0.1 (0.1 rad/s, 190°C) ≤ 480,000 Pa•s, or ≤ 470,000 Pa•s, or ≤ 460,000 Pa•s, or ≤ 450,000 Pa•s, or ≤ 440,000 Pa•s, or ≤ 430,000 Pa•s.

z5) The composition of any one of a)-y5) above, where for the second composition, the third interpolymer has a V0.1 (0.1 rad/s, 190°C) ≥ 260,000 Pa•s, or ≥ 270,000 Pa•s, or ≥ 280,000 Pa•s, or ≥ 290,000 Pa•s, or ≥ 300,000 Pa•s, or ≥ 310,000 Pa•s.

a6) The composition of any one of a)-z5) above, where the third interpolymer has a V0.1 (0.1 rad/s, 190°C) ≤ 630,000 Pa•s, or ≤ 620,000 Pa•s, or ≤ 610,000 Pa•s, or ≤ 600,000 Pa•s, or ≤ 590,000 Pa•s, or ≤ 580,000 Pa•s.

b6) The composition of any one of a)-a6) above, where for the first composition, the first interpolymer has a Rheology Ratio (RR) ≥ 36.0, or ≥ 38.0, or ≥ 40.0, or ≥ 42.0, or ≥ 44.0, or ≥ 46.0, or ≥ 48.0.

c6) The composition of any one of a)-b6) above, where the first interpolymer has a Rheology Ratio (RR) ≤ 64.0, or ≤ 62.0, or ≤ 60.0, or ≤ 58.0, or ≤ 56.0, or ≤ 54.0.

d6) The composition of any one of a)-c6) above, where for the second composition, the third interpolymer has a Rheology Ratio (RR) ≥ 26.0, or ≥ 28.0, or ≥ 30.0, or ≥ 32.0, or ≥ 34.0, or ≥ 36.0.

e6) The composition of any one of a)-d6) above, where the third interpolymer has a Rheology Ratio (RR) ≤ 72.0, or ≤ 70.0, or ≤ 68.0, or ≤ 66.0, or ≤ 64.0, or ≤ 62.0.

f6) The composition of any one of a)-e6) above, where the composition has a ratio { $[RR]_{First\ Interpolymer}$ / $[RR]_{Third\ Interpolymer}$} ≥ 0.60, or ≥ 0.65, or ≥ 0.70, or ≥ 0.75, or ≥ 0.80.

g6) The composition of any one of a)-f6) above, where the composition has a ratio {$[RR]_{First\ Interpolymer}$ / $[RR]_{Third\ Interpolymer}$} ≤ 1.70, or ≤ 1.65, or ≤ 1.60, or ≤ 1.55, or ≤ 1.50.

h6) The composition of any one of a)-g6) above, where the composition has a{ $[MWD]_{First\ Interpolymer}$ / $[MWD]_{Third\ Interpolymer}$} ≥ 0.75, or ≥ 0.80, or ≥ 0.85, or ≥ 0.90, or ≥ 0.95.

i6) The composition of any one of a)-h6) above, where the composition has a{ $[MWD]_{First\ Interpolymer}$ / $[MWD]_{Third\ Interpolymer}$} ≤ 1.25, or ≤ 1.20, or ≤ 1.15, or ≤ 1.10, or ≤ 1.05.

j6) The composition of any one of a)-i6) above, where for the first composition, the first ethylene/alpha-olefin/nonconjugated polyene interpolymer and/or the second ethylene/alpha-olefin/nonconjugated polyene interpolymer each independently comprises 50 wt% or a majority amount of polymerized ethylene, based on the weight of the respective interpolymer. Further each interpolymer is independently an EPDM; further each diene is ENB. Further both interpolymers independently comprises 50 wt% or a majority amount of polymerized ethylene.

k6) The composition of any one of a)-j6) above, where for the second composition, the third ethylene/alpha-olefin/nonconjugated polyene interpolymer and/or the fourth third ethylene/alpha-olefin/nonconjugated polyene interpolymer each independently comprises 50 wt% or a majority amount of polymerized ethylene, based on the weight of the respective interpolymer. Further each interpolymer is independently an EPDM; further each diene is ENB. Further both interpolymers independently comprises 50 wt% or a majority amount of polymerized ethylene.

l6) The composition of any one of a)-k6) above, where the composition comprises ≥ 20.0 wt%, or ≥ 22.0 wt%, or ≥ 24.0 wt%, or ≥ 26.0 wt%, of the sum of the first composition and the second composition, based on the weight of the composition.

m6) The composition of any one of a)-16) above, where the composition comprises ≤ 40.0 wt%, or ≤ 38.0 wt%, or ≤ 36.0 wt%, or ≤ 34.0 wt%, or ≤ 32.0 wt%, or ≤ 30.0 wt%, of the sum of the first composition and the second composition, based on the weight of the composition.

n6) The composition of any one of a)-m6) above, where the composition comprises ≥ 10.0 wt%, or ≥ 12.0 wt%, or ≥ 14.0 wt%, or ≥ 16.0 wt%, ≥ 18.0 wt%, of the first composition, based on the weight of the composition.

o6) The composition of any one of a)-n6) above, where the composition comprises ≤ 28.0 wt%, or ≤ 26.0 wt%, or ≤ 24.0 wt%, or ≤ 22.0 wt%, or ≤ 20.0 wt%, of the first composition, based on the weight of the composition.

p6) The composition of any one of a)-o6) above, where the composition comprises ≥ 4.0 wt%, or ≥ 5.0 wt%, or ≥ 6.0 wt%, or ≥ 7.0 wt%, of the second composition, based on the weight of the composition.

q6) The composition of any one of a)-p6) above, where the composition comprises ≤ 12.0 wt%, or ≤ 11.0 wt%, or ≤ 10.0 wt%, or ≤ 9.0 wt%, or ≤ 8.0 wt%, of the second composition, based on the weight of the composition.

r6) The composition of any one of a)-q6) above, where the first interpolymer has a Tm value ≥ 1.0°C, or ≥ 1.5°C, or ≥ 2.0°C, or ≥ 2.5°C, or ≥ 3.0°C, or ≥ 3.5°C, or ≥ 4.0°C.

s6) The composition of any one of a)-r6) above, where the first interpolymer has a Tm value ≤ 11.0°C, or ≤ 10.5°C, or ≤ 10.0°C, or ≤ 9.5°C, or 9.0°C, or ≤ 8.5°C, or ≤ 8.0°C.

t6) The composition of any one of a)-s6) above, where the first interpolymer has a Tg value ≥ -50.0°C, or ≥ -48.0°C, or ≥ -46.0°C, or ≥ -44.0°C, or ≥ -42.0°C, or ≥ -40.0°C.

u6) The composition of any one of a)-t6) above, where the first interpolymer has a Tg value ≤ -30.0°C, or ≤ -32.0°C, or ≤ -34.0°C, or ≤ -36.0°C, or ≤ -38.0°C.

v6) The composition of any one of a)-u6) above, where the first interpolymer has a Tc value ≥ -4.0°C, or ≥ -3.5°C, or ≥ -3.0°C, or ≥ -2.5°C, or ≥ -2.0°C.

w6) The composition of any one of a)-v6) above, where the first interpolymer has a Tc value ≤ 4.0°C, or ≤ 3.5°C, or ≤ 3.0°C, or ≤ 2.5°C, or ≤ 2.0°C, or ≤ 1.5°C, or ≤ 1.0°C.

x6) The composition of any one of a)-w6) above, where the first interpolymer has a % crystallinity ≥ 5.0%, or ≥ 5.5%, or ≥ 6.0%, or ≥ 6.5%, or ≥ 7.0%.

y6) The composition of any one of a)-x6) above, where the first interpolymer has a % crystallinity ≤ 12.0%, or ≤ 11.5%, or ≤ 11.0%, or ≤ 10.5%, or ≤ 10.0%, or ≤ 9.5%, or ≤ 9.0%.

z6) The composition of any one of a)-y6) above, where the third interpolymer has a Tm value ≥ 60.0°C, or ≥ 62.0°C, or ≥ 64.0°C, or ≥ 66.0°C, or ≥ 68.0°C, or ≥ 70.0°C.

a7) The composition of any one of a)-z6) above, where the third interpolymer has a Tm value ≤ 80.0°C, or ≤ 78.0°C, or ≤ 76.0°C, or ≤ 74.0°C.

b7) The composition of any one of a)-a7) above, where the third interpolymer has a Tg value ≥ -40.0°C, or ≥ -38.0°C, or ≥ -36.0°C, or ≥ -34.0°C, or ≥ -32.0°C, or ≥ -30.0°C.

c7) The composition of any one of a)-b7) above, where the third interpolymer has a Tg value ≤ -10.0°C, or ≤ -12.0°C, or ≤ -14.0°C, or ≤ -16.0°C, or ≤ -18.0°C, or ≤ -20.0°C, or ≤ -22.0°C, or ≤ -24.0°C.

d7) The composition of any one of a)-c7) above, where the third interpolymer has a Tc value ≥ 42.0°C, or ≥ 44.0°C, or ≥ 46.0°C, or ≥ 48.0°C, or ≥ 50.0°C, or ≥ 52.0°C.

e7) The composition of any one of a)-d7) above, where the third interpolymer has a Tc value ≤ 70.0°C, or ≤ 68.0°C, or ≤ 66.0°C, or ≤ 64.0°C, or ≤ 62.0°C, or ≤ 60.0°C, or ≤ 58.0°C.

f7) The composition of any one of a)-e7) above, where the third interpolymer has a % crystallinity ≥ 10.0%, or ≥ 12.0%, or ≥ 14.0%, or ≥ 16.0%, or ≥ 18.0%, or ≥ 20.0%.

g7) The composition of any one of a)-f7) above, where the third interpolymer has a % crystallinity ≤ 30.0%, or ≤ 28.0%, or ≤ 26.0%, or ≤ 24.0%, or ≤ 22.0%.

h7) The composition of any one of a)-g7) above, where the composition further comprises a calcined filler formed from a filler composition comprising a kaolinite.

i7) The composition of h7) above, where the filler composition further comprises a silica.

j7) The composition of h7) or i7) above, where the weight ratio of the calcined filler to the sum of the first and second compositions is ≥ 0.80, or ≥ 0.85, or ≥ 0.90, or ≥ 0.95, or ≥ 1.00, or ≥ 1.05.

k7) The composition of any one of h7)-j7) above, where the weight ratio of the calcined filler to the sum of the first and second compositions is ≤ 1.30, or ≤ 1.25, or ≤ 1.20, or ≤ 1.15, or ≤ 1.10.

l7) The composition of any one of h7)-k7) above, where calcined filler is surface treated with a composition comprising a mercapto-silane, an alkyl silane, a vinyl silane, an epoxy, or an amino silane.

m7) The composition of any one of a)-17) above, where the composition further comprises carbon black.

n7) The composition of m7) above, where the weight ratio of the carbon black to the sum of the first and second compositions is ≥ 0.40, or ≥ 0.45, or ≥ 0.50, or ≥ 0.55, or ≥ 0.60, or ≥ 0.65, or ≥ 0.70, or ≥ 0.75.

o7) The composition of m7) or n7) above, where the weight ratio of the carbon black to the sum of the first and second compositions is ≤ 1.10, or ≤ 1.05, or ≤ 1.00, or ≤ 0.95, or ≤ 0.90, or ≤ 0.85, or ≤ 0.80.

p7) The composition of any one of m7)-o7) above, where the weight ratio of the carbon black to the calcined filler is ≥ 0.50, or ≥ 0.55, or ≥ 0.60, or ≥ 0.65.

q7) The composition of any one of m7)-p7) above, where the weight ratio of the carbon black to the calcined filler is ≤ 0.90, or ≤ 0.85, or ≤ 0.80, or ≤ 0.75, or ≤ 0.70.

r7) The composition of any one of a)-q7) above, where the composition further comprises an oil.

s7) The composition of r7) above, where the weight ratio of the oil to the sum of the first and second compositions is ≥ 0.30, or ≥ 0.35, or ≥ 0.40, or ≥ 0.45, or ≥ 0.50, or ≥ 0.55, or ≥ 0.60, or ≥ 0.65, or ≥ 0.70.

t7) The composition of r7) or s7) above, where the weight ratio of the oil to the sum of the first and second compositions is ≤ 1.00, or ≤ 0.95, or ≤ 0.90, or ≤ 0.85, or ≤ 0.80, or ≤ 0.75.

u7) The composition of any one of a)-t7) above, where the composition has a Mooney Viscosity (ML(1+4) at 100°C) $\geq$ 26, or $\geq$ 28, or $\geq$ 30, or $\geq$ 32, or $\geq$ 34, or $\geq$ 36, or $\geq$ 38, or $\geq$ 40, or $\geq$ 42.

v7) The composition of any one of a)-u7) above, where the composition has a Mooney Viscosity (ML(1+4) at 100°C) $\leq$ 60, or $\leq$ 58, or $\leq$ 56, or $\leq$ 54, or $\leq$ 52, or $\leq$ 50, or $\leq$ 48, or $\leq$ 46.

w7) The composition of any one of a)-v7) above, where the composition has a Volume Resistivity $\geq 4 \times 10^{13}$ ohm·cm, or $\geq 5 \times 10^{13}$ ohm·cm, or $\geq 6 \times 10^{13}$ ohm·cm. In a further embodiment, the composition has a Volume Resistivity $\leq 1 \times 10^{15}$ ohm·cm.

x7) The composition of any one of a)-w7) above, where the composition has a Maximum Tensile Strength $\geq$ 4 MPa, or $\geq$ 5 MPa, or $\geq$ 6 MPa, or $\geq$ 7 MPa. In a further embodiment, the composition has a Maximum Tensile Strength $\leq$ 16 MPa.

y7) The composition of any one of a)-x7) above, where the composition has a Maximum Elongation at Break $\geq$ 400%, or $\geq$ 420%, or $\geq$ 440%, or $\geq$ 460%, or $\geq$ 480%, or $\geq$ 500%, or $\geq$ 520%, or $\geq$ 540%, or $\geq$ 560%, or $\geq$ 580%, or $\geq$ 600%, or $\geq$ 610%, or $\geq$ 620%, or $\geq$ 630%, or $\geq$ 640%, or $\geq$ 650%, or $\geq$ 660%, or $\geq$ 670%.

z7) The composition of any one of a)-y7) above, where the composition has a Trouser Tear Strength $\geq$ 10.0 N/mm, or $\geq$ 10.5 N/mm, or $\geq$ 11.0 N/mm, or $\geq$ 11.5 N/mm.

a8) The composition of any one of a)-z7) above, where the composition has a Shore A Hardness $\geq$ 60, or $\geq$ 61, or $\geq$ 62, or $\geq$ 63. In a further embodiment, the composition has a Shore A Hardness $\leq$ 95.

b8) The composition of any one of a)-a8) above, where the composition has a Modulus (100%) $\geq$ 1.90 MPa, or $\geq$ 1.95 MPa, or $\geq$ 2.00 MPa.

c8) The composition of any one of a)-b8) above, where the composition further comprises a crosslinking agent.

d8) The composition of c8) above, where the crosslinking agent comprises sulfur, one or more activators, and/or one or more accelerators, and further sulfur.

e8) The composition of c8) or d8) above, where the crosslinking agent is present in an amount from 0.5 phr to 18 phr, or from 5.0 phr to 18 phr, or from 12 phr to 18 phr, based on the 100 parts of the first and second compositions.

f8) A crosslinked composition formed from the composition of any one of a)-e8) above. g8) An article comprising at least one component formed from the composition of any one of a)-f8) above.

h8) The article of g8) where the article is an extruded article (for example, an extruded profile), an injected molded article, or a thermoformed article, and further an extruded article (for example, an extruded profile).

i8) The article of g8) or h8) above, where the article is selected from a weather strip, a hose (for example, an automotive hose), a belt (for example, an automotive belt), a building material, a roofing membrane, a wire and cable jacket, a flooring material, a computer part, a gasket, or a tire.

TEST METHODS

## Gel Permeation Chromatography

The chromatographic system consisted of a PolymerChar GPC-IR (Valencia, Spain) high temperature GPC chromatograph, equipped with an internal IR5 infra-red detector (IR5). The autosampler oven compartment was set at 160° Celsius, and the column compartment was set at 150° Celsius. The columns were four Agilent "Mixed A" 30 cm, 20-micron, linear mixed-bed columns, and a 20-micron pre-column. The chromatographic solvent was 1,2,4-trichlorobenzene, which contained "200 ppm of butylated hydroxytoluene (BHT)." The solvent source was nitrogen sparged. The injection volume was 200 microliters, and the flow rate was 1.0 milliliters/minute.

Calibration of the GPC column set was performed with "21 narrow molecular weight distribution polystyrene standards," with molecular weights ranging from 580 to 8,400,000 g/mol, and which were arranged in six "cocktail" mixtures, with at least a decade of separation between individual molecular weights. The standards were purchased from Agilent Technologies. The polystyrene standards were prepared at "0.025 grams in 50 milliliters of solvent" for molecular weights equal to, or greater than, 1,000,000 g/mol, and "0.05 grams in 50 milliliters of solvent" for molecular weights less than 1,000,000 g/mol. The polystyrene standards were dissolved at 80° Celsius, with gentle agitation, for 30 minutes. The polystyrene standard peak molecular weights were converted to polyethylene molecular weights using Equation 1 (as described in Williams and Ward, J. Polym. Sci., Polym. Let., 6, 621 (1968)):

$$M_{polyethylene} = A \times \left( M_{polystyrene} \right)^{B} \quad (\text{EQN. 1}),$$

where M is the molecular weight, A has a value of 0.4315 and B is equal to 1.0.

A fifth order polynomial was used to fit the respective polyethylene-equivalent calibration points. A small adjustment to A (from approximately 0.375 to 0.445) was made to correct for column resolution and band-broadening effects, such that linear homopolymer polyethylene standard is obtained at 120,000 Mw.

The total plate count of the GPC column set was performed with decane (prepared at "0.04 g in 50 milliliters of TCB," and dissolved for 20 minutes with gentle agitation.) The plate count (Equation 2) and symmetry (Equation 3) were measured on a "200 microliter injection," according to the following equations:

$$Plate\ Count = 5.54 * \left( \frac{(RV_{Peak\ Max}}{Peak\ Width\ at\ \frac{1}{2}height} \right)^2 \qquad (EQN.\ 2),$$

where RV is the retention volume in milliliters, the peak width is in milliliters, the peak max is the maximum height of the peak, and ½ height is ½ height of the peak maximum;

$$Symmetry = \frac{(Rear\ Peak\ RV_{one\ tenth\ height} - RV_{Peak\ max})}{(RV_{Peak\ max} - Front\ Peak\ RV_{one\ tenth\ height})} \qquad (EQN.\ 3),$$

where RV is the retention volume in milliliters, and the peak width is in milliliters, Peak max is the maximum position of the peak, one tenth height is 1/10 height of the peak maximum, and where rear peak refers to the peak tail at later retention volumes than the peak maximum, and where front peak refers to the peak front at earlier retention volumes than the peak max. The plate count for the chromatographic system should be greater than 18,000, and the symmetry should be between 0.98 and 1.22.

Samples were prepared in a semi-automatic manner with the PolymerChar "Instrument Control" Software, wherein the samples were weight-targeted at "2 mg/ml," and the solvent (contained 200 ppm BHT) was added to a pre nitrogen-sparged septa-capped vial, via the PolymerChar high temperature autosampler. The samples were dissolved for two hours at 160°C, under "low speed" shaking. The calculations of Mn(GPC), Mw(GPC), and Mz(GPC) were based on GPC results, using the internal IR5 detector (measurement channel) of the PolymerChar GPC-IR chromatograph, according to Equations 4-6, and using PolymerChar GPCOne™ software, the baseline-subtracted IR chromatogram at each equally-spaced data collection point (i), and the polyethylene equivalent molecular weight obtained from the narrow standard calibration curve for the point (i) from Equation 1.

$$Mn_{(GPC)} = \frac{\sum^i IR_i}{\sum^i \left( IR_i \middle/ M_{polyethylene_i} \right)} \qquad (EQN.\ 4),$$

$$Mw_{(GPC)} = \frac{\sum^i \left( IR_i * M_{polyethylene_i} \right)}{\sum^i IR_i} \qquad (EQN.\ 5),$$

$$Mz_{(GPC)} = \frac{\sum^i \left( IR_i * M_{polyethylene_i}^2 \right)}{\sum^i \left( IR_i * M_{polyethylene_i} \right)} \qquad (EQN.\ 6).$$

In order to monitor the deviations over time, a flowrate marker (decane) was introduced into each sample, via a micropump, controlled with the PolymerChar GPC-IR system. This flowrate marker (FM) was used to linearly correct the pump flowrate (Flowrate(nominal)) for each sample, by RV alignment of the respective decane peak within the sample (RV(FM Sample)), to that of the decane peak within the narrow standards calibration (RV(FM Calibrated)). Any changes in the time of the decane marker peak were then assumed to be related to a linear shift in flowrate (Flowrate(effective)) for the entire run. To facilitate the highest accuracy of a RV measurement of the flow marker peak, a least-squares fitting routine was used to fit the peak of the flow marker concentration chromatogram to a quadratic equation. The first derivative of the quadratic equation was then used to solve for the true peak position. After calibrating the system, based on a flow marker peak, the effective flowrate (with respect to the narrow standards calibration) was calculated, as in Equation 7. Processing of the flow marker peak was done via the PolymerChar GPCOne™ Software. Acceptable flowrate correction is such that the effective flowrate should be within +/-1% of the nominal flowrate: Flowrate(effective) = Flowrate(nominal) * (RV (FM Calibrated) / RV(FM Sample)) (EQN. 7).

$$\text{(EQN. 7).}$$

## Dynamic Mechanical Spectroscopy (DMS)

Small angle oscillatory shear was performed using a TA Instruments ARES, equipped with "25 mm parallel plates," under a nitrogen purge. The time between sample loading, and the beginning of the test, was set to five minutes for all samples. The experiments were performed at 190°C, over a frequency range of 0.1 to 100 rad/s. The strain amplitude was adjusted, based upon the response of the samples, from 1 to 3%. The stress response was analyzed in terms of amplitude and phase, from which the storage modulus (G'), loss modulus (G"), dynamic viscosity $\eta^*$, and tan delta could be calculated. Test samples were "25 mm diameter x 3.3 mm thick" compression molded discs, formed at 180°C, and 10 MPa molding pressure, for five minutes, ambient atmosphere, and then quenched between chilled platens (15-20°C) for two minutes. The Viscosities (V0.1, V100) and the rheology ratio (V0.1/V 100 or RR), each at 190°C, were recorded.

## Mooney Viscosity of Polymer Composition

Mooney viscosity (ML1+4) and stress relaxation (ML1+4+3 min) of each formulated polymer composition was recorded with an Alpha Technologies MV2000E Viscometer according to ASTM D1646, at 100°C (large rotor). The preheating time was one minute. The viscosity of each formulated compositions was measured using an uncured sheet (see experimental section) of about 25 grams.

## Mooney Viscosity of Polymer

Mooney Viscosity (ML1+4 at 125°C) of each polymer (and first composition and second composition) was measured in accordance with ASTM 1646, with a one minute preheat time and a "four minute" rotor operation time. The instrument was an Alpha Technologies Mooney Viscometer 2000. Sample size around 25 grams.

## Cure Dynamics - MDR

Cure characteristics were measured using an Alpha Technologies Moving Die Rheometer (MDR) 2000 E, according to ASTM D5289, at 180°C, and with a 0.5deg arc. The test period was 30 minutes. Each sample (6-8 grams) was cut from the respective uncured sheet (see experimental section). Reported values were ts2 (time to reach a "2 unit" increase in torque, from the ML), t90 (time to reach 90% of the maximum cure), MH (maximum viscosity or maximum cure) and ML (minimum viscosity), and cure rate index.

Mooney Scorch was measured according to ASTM D-1646, using an Alpha Technologies Mooney Viscometer 2000. The Mooney Viscometer was set at 125°C, and the Mooney Scorch values were reported for a small rotor, and represented the time to increase "x Mooney units" above the minimum viscosity (for example, t3 is the time needed to increase the viscosity "three torque units"). The total test time was 30 minutes, with a one minute preheat time. The viscosity of each composition was measured from the respective uncured sheet, which was cured in the viscometer, so that the scorch properties could be examined. Samples were conditioned for 24 hours at room temperature, prior to testing. The t3, t18 and cure index were reported according to ASTM D1646.

## Tensile Strength

Tensile properties were measured according to ASTM D412 using a Zwick Roell Z010 device. Each dumbbell sample (type 5A) was cut from a compression molded (cured) plaque (t90 + 3min, 180°C, 100 bars, ambient atmosphere, 2 mm thick plaque) - see experimental section. Here "t90" is the time for the sample to reach 90% of its maximum cure value, as determined by MDR. Tensile properties (tensile strength and elongation) were measured at room temperature, following the method ASTM D-412, in the machine direction (500 mm/min).

## Trouser Tear Strength (or Die-T Tear Strength)

Trouser Tear Strength was measured according to ASTM D624 type-T (Trouser Tear) on a Zwick Roell Z010 device. Test specimens were cut from compression molded (cured) plaques (t90 + 3 minutes, 180°C, 100 bars, ambient atmosphere, 2 mm thick plaque) - see experimental section. The test speed of the extensiometer was 100 mm/min.

**Shore A Hardness**

Shore A Hardness was measured according to ASTM D2240, using 3-layers of compression molded plaques (t90 + 3 minutes, 180°C, 100 bars, ambient atmosphere, 2 mm thick plaque, 6 mm total thickness for three layers). See experimental section. Sample specimens were cut from compression molded plaques. Shore A hardness was measured on a Shore A Durometer Model 2000, made by INSTRON, with a Durometer Stand Model 902. This method permits hardness measurements, based on either initial indentation, or indentation after a specific time, or both. Here, the indentation was measured after at a specified time of three seconds.

**Density of Cured Polymer Composition**

The density of each cured composition was determined according to the Archimedean principle (ASTM B962-17). Each test sample (approx. 10 grams) was cut from a compression molded (cured) plaque (t90 + 3 minutes, 180°C, 100 bars, ambient atmosphere, 2 mm thick plaque) - see experimental section. The test sample was dried and weighed, after immersion in isopropanol at room temperature.

**Green Strength**

Green Strength properties were measured according to ASTM D412, using a Zwick Roell Z010 device, with a test speed of 500 mm/min, a pre-load of 0.2N, and a temperature of 23°C. Each dumbbell (type 5A) sample was cut from an uncured sheet, processed using a two-roll mill (90°C). See the experimental section.

**Differential Scanning Calorimetry (DSC)**

Differential Scanning Calorimetry (DSC) was used to measure crystallinity in ethylene-based (PE) samples (including noted EPDMs in experimental section) and propylene-based (PP) samples. Each sample (0.5 g) was compression molded into a film, at 5000 psi, 190°C, for two minutes. About 5 to 8 mg of film sample was weighed and placed in a DSC pan. The lid was crimped on the pan to ensure a closed atmosphere. The sample pan was placed in a DSC cell, and then heated, at a rate of approximately 10°C/min, to a temperature of 180°C for PE (230°C for PP). The sample was kept at this temperature for three minutes. Then the sample was cooled at a rate of 10°C/min to -90°C for PE (-60°C for PP), and kept isothermally at that temperature for three minutes. The sample was next heated at a rate of 10°C/min, until complete melting (second heat). The percent crystallinity was calculated by dividing the heat of fusion (Hf), determined from the second heat curve, by a theoretical heat of fusion of 292 J/g for PE (165 J/g for PP), and multiplying this quantity by 100 (for example, % cryst. = (Hf / 292 J/g) x 100 (for PE)). Unless otherwise stated, melting point(s) (Tm) of each polymer was determined from the second heat curve, and the crystallization temperature (Tc) was determined from the first cooling curve. The respective peak temperatures for the Tm and the Tc were recorded.

**Polymer Density**

Polymer density is measured in accordance with ASTM D-297.

**Volume Resistivity**

A compression molded plaque (t90 + 3 minutes, 180°C, 100 bars, ambient atmosphere, 2 mm thick plaque - see experimental section) of each formulated composition was subject to volume resistivity measurements, according to DIN IEC 93. Sample dimensions were "10 cm x 10 cm x 2 mm." Measurements were taken after one minute at an applied voltage of 100V.

**FTIR Method for EPDM Composition Analysis**

The EPDM terpolymers containing ethylene, propylene, and 5-ethylidene-2-norbornene were analyzed using ASTM D3900 for ethylene content, and ASTM D6047 for ethylidene-norbornene content.

**13C NMR Method for EPDM Composition Analysis**

The samples were prepared by adding approximately "2.6g" of a "50/50 mixture of tetrachloroethane-d2/orthodichlorobenzene," that is "0.025M" in chromium acetylacetonate (relaxation agent), to "0.2 g sample" in a 10 mm NMR tube. The samples were dissolved, and homogenized, by heating the tube and its contents to 150°C. The data were collected using a Bruker 400 MHz spectrometer, equipped with a Bruker Dual DUL high-temperature CryoProbe. The data was acquired using "160 scans per data file," a six second pulse repetition delay, with a sample temperature of 120°C. The acquisition was carried out using a spectral width of 25,000Hz and a file size of 32K data points.

NMR spectral analysis of each sample composition was carried out using the following analysis method. Quantitation of monomers present in EPDM can be calculated using the following equations (1 through 9). The calculation of moles ethylene normalizes the spectral range from 55.0 to 5.0 ppm to 1000 integral units. The contribution under the normalized integral area only accounts for seven of the ENB carbons. The ENB diene peaks at 111 ppm and 147 ppm are excluded from the calculation, due to concerns that double bonds may react at high temperatures.

$$\text{Equation 1} \quad molesE = (1000 - 3*molesP - 7*molesENB) / 2;$$

$$\text{Equation 2} \quad molesENB = CH3(13.6 - 14.7\ ppm);$$

$$\text{Equation 3} \quad molesP = CH3(19.5 - 22.0\ ppm);$$

$$\text{Equation 4} \quad mole\%ethylene = (100*molesE) / (molesE + molesP + molesENB);$$

$$\text{Equation 5} \quad mole\%propylene = (100*molesP) / (molesE + molesP + molesENB);$$

$$\text{Equation 6} \quad mole\%ENB = (100*molesENB) / (molesE + molesP + molesENB);$$

$$\text{Equation 7} \quad wt\%ethylene = (100*molesE*28) / (molesE*28 + molesP*42 + molesENB*120);$$

$$\text{Equation 8} \quad wt\%propylene = (100*molesP*42) / (molesE*28 + molesP*42 + molesENB*120);$$

$$\text{Equation 9} \quad wt\%ENB = (100*molesENB*120) / (molesE*28 + molesP*42 + molesENB*120).$$

The 13C NMR spectral analysis of the EPDM can be used to quantitate the level of tacticity (%*mm*). In one embodiment, each EPDM (inventive compositions) independently displays a peak area from 21.3 - 22.0 ppm (*rmmr, mmmr, mmmm*) greater than 3.5% of the total integral area from 19.5 to 22.0 ppm. Spectral data were referenced to the EEE backbone at 30 ppm. Peak responses in this region typically are related to differences in propylene tacticity (% mm) that have been incorporated into the EPDM. A similar analysis can be done for another type of ethylene/alpha-olefin/nonconjugated polyene interpolymer.

EXPERIMENTAL

**Reagents and Commercial Polymers**

SPHERON 6000A - Carbon black, reinforcement / filler, available from Cabot.
SILFIT Z91 - White (Calcined) Filler, available from Hoffmann Mineral GmbH. SILFIT Z91 is a natural combination of silica (corpuscular) and kaolinite (lamellar) that has been heat treated.
SUNPAR 2280 - Plasticizer / paraffinic oil, available from R.E. Carroll, Inc.
RHENOGRAN ZnO-70 - Cure Activator, available from Rhein Chemie.
Stearic acid - Cure Activator and process aid, available from Loxiol.
RHENOGRAN CaO-80 - Desiccant, available from Rhein Chemie.
CARBOWAX PEG 4000 - Process aid (Polyethylene Glycol), available from The Dow Chemical Company.
STRUKTOL W33 - Dispersant, available from Struktol.
RHENOGRAN RETARDER E-80 - Cure Retarder, available from Rhein Chemie.
RHENOGRAN MBTS-70 - Cure Accelerator, available from Rhein Chemie.

RHENOGRAN ZBEC-70 - Cure Accelerator, available from Rhein Chemie.
RHENOGRAN TP-50 - Cure Accelerator, available from Rhein Chemie.
RHENOGRAN CBS-80 - Delayed action Accelerator, available from Rhein Chemie.
RHENOGRAN CLD-80 - Sulfur donor, available from Rhein Chemie.
RHENOGRAN S-80 - Curative, available from Rhein Chemie.
NORDEL IP 4725P (EPDM) with a Mooney Viscosity (ML1+4, 125°C) of 25, a density of 0.88 g/cc, a mass percent ethylene of 70 wt% (ASTM D3900), and a mass percent ENB of 4.9 wt% (ASTM D6047). Available from The Dow Chemical Company.
NORDEL IP 5565 (EPDM) with a Mooney Viscosity (ML1+4, 125°C) of 65, a density of 0.86 g/cc, a mass percent ethylene of 50 wt% (ASTM D3900), and a mass percent ENB of 7.5 wt% (ASTM D6047). Available from The Dow Chemical Company.

**Representative Synthesis of Experimental EPDM**

*Continuous Polymerization*

The polymerization reaction was performed under steady state conditions, that is, constant reactant concentration and continual input of solvent, monomers, and catalyst, and constant withdrawal of unreacted monomers, solvent and polymer. The reactor system was cooled and pressurized to prevent formation of a vapor phase. Monomers were ethylene (CAS 74-85-1), propylene (CAS 115-07-1), and 5-ethylidene-2-norbornene (ENB, CAS 16219-75-3). The polymer composition was produced in a solution polymerization process, using a continuous stir-tanked reactor, followed by loop reactor. Ethylene was introduced in a mixture of a solvent of ISOPAR E (available from ExxonMobil). Propylene and 5-ethylidene-2-norbornene (ENB) were each introduced to the reactor as a reactor feed stream. Catalyst was fed to each the reactor separately, and activated, *in-situ,* using co-catalyst 1 and co-catalyst 2.

The outlet of each reactor was consequently a mixture of polymer, solvent, and reduced levels of the initial monomers. The outlet of the first reactor was fed directly into the second reactor (unless otherwise sampled). The molecular weight of the polymer was controlled by adjusting each reactor's temperature, monomer conversion and/or the addition of a chain terminating agent, such as hydrogen. After polymerization, a small amount of water was introduced into the reactor exit stream as a catalyst kill, and the reactor exit stream was introduced into a flash vessel, in which the solids concentration was increased by at least 100 percent. A portion of each unreacted monomers, that is, ENB, ethylene, and propylene, and solvent was then collected, and recycled back to the reactor feed(s) as appropriate. See also U.S. Pat. Nos. 5,977,251 and 6,545,088, and the references therein. Monomer feed rate, polymerization temperature, and other conditions are listed in below in Table 1 and Table 2. Polymer properties are listed in Table 4. Comparative polymers are listed in Table 3.

Table 1: Reaction Conditions for Synthesized EPDM

| | Reactor Temp. [degC] | Pressure [MPa (psig)] | Solvent/ Ethylene Feed Ratio [Kg/Kg (lb/lb)] | Propylene/ Ethylene Feed Ratio [Kg/Kg (lb/lb)] | ENB/Ethylene Feed Ratio [Kg/Kg (lb/lb)] |
|---|---|---|---|---|---|
| EPDM01-R1 (first reactor) | 130 | 5.12 (743) | 0.0926 | 0.2800 | 0.1867 |
| EPDM01 (second reactor) | 165 | 5.00 (725) | 0.0304 | 0.4326 | 0.0593 |
| EPDM02-R1 (first reactor) | 127 | 5.00 (725) | 0.0983 | 0.2697 | 0.1816 |
| EPDM02 (second reactor) | 170 | 5.00 (725) | 0.0294 | 0.4783 | 0.0679 |
| EPDM03-R1 (first reactor) | 120 | 5.00 (725) | 0.1118 | 1.003 | 0.4690 |
| EPDM03 (second reactor) | 130 | 5.00 (725) | 0.0467 | 0.8949 | 0.0882 |
| EPDM04-R1 (first reactor) | 123 | 5.00 (725) | 0.1112 | 1.4866 | 0.5228 |
| EPDM04 (second reactor) | 130 | 5.00 (725) | 0.0462 | 0.5618 | 0.0954 |

Table 2: Reaction Conditions for Synthesized EPDM

| | H2 mol % | C2 Concen. [g/L] | Catalyst* Catalyst Efficiency [Kg_poly/Kg_metal (lb_poly/lb_metal)] x10E6 | Cocatalyst-1** Borate/Cat. Metal Ratio [mol/mol] | Cocatalyst-2*** Aluminum/Cat. Metal Ratio [mol/mol] |
|---|---|---|---|---|---|
| EPDM01-R1 (first reactor) | 0.11 | 23.0 | 12.8 | 1.9 | 32.3 |
| EPDM01 (second reactor) | 0.20 | 10.3 | 13.8 | 2.0 | 5.1 |
| EPDM02-R1 (first reactor) | 0.01 | 22.2 | 0.84 | 2.0 | 9.9 |
| EPDM02 (second reactor) | 2.17 | 6.2 | 0.59 | 2.0 | 10.0 |

*Catalyst is [[2',2'''-[1,3-propanediylbis(oxy-kO)]bis[3-[3,6-bis(1,1-dimethylethyl)-9H-carbazol-9-yl]-5'-fluoro-5-(1,1,3,3-tetramethylbutyl)[1,1'-biphenyl]-2-olato-kO]](2-)]-hafnium dimethyl.

**Cocatalyst-1 was a mixture of methyldi(C14-18 alkyl)ammonium salts of tetrakis(pentafluorophenyl)borate, prepared by reaction of a long chain trialkylamine (ARMEEN M2HT, available from Akzo-Nobel, Inc.), HCl and Li[B(C6F5)4], substantially as disclosed in USP 5,919,988 (Ex. 2). Cocatalyst-1 was purchased from Boulder Scientific, and used without further purification.

***Cocatalyst-2, (modified methylalumoxane (MMAO)), was purchased from Akzo Nobel, and used without further purification.

Table 3: Property Data for Comparative Polymers

| | | NORDEL 4725P | NORDEL 5565 |
|---|---|---|---|
| C2 | wt% | 70 | 50 |
| ENB | wt% | 4.9 | 7.5 |
| Mooney Viscosity (ML (1+4)@125°C) | MU | 25 | 65 |
| Mn | g/mol | 37,439 | 71,776 |
| Mw | g/mol | 119,369 | 211,684 |
| MWD | g/mol | 3.19 | 2.95 |
| Rheology Ratio | | 13 | 33 |
| (RR/Mn) x1000 | | 0.35 | 0.46 |
| RR/MWD | | 4.08 | 11.2 |

Table 4: Property Data for First Compositions - Inventive

| | | Units | EPDM01 (Second Composition) | | EPDM02 (Second Composition) | | EPDM03 (First Composition) | | EPDM04 (First Composition) | |
|---|---|---|---|---|---|---|---|---|---|---|
| | | | First reactor | Second Reactor (final polymer composition) | First reactor | Second Reactor (final polymer composition) | First reactor | Second Reactor (final polymer composition) | First reactor | Second reactor (final polymer composition) |
| | wt% C2 | | 72.8[A] | 72.4[B] | 72.81[A] | 71.94[B] | 55.16[C] | 59.9[D] | 64.23[C] | 59.62[D] |
| | wt% C3 | | 20.6[A] | 20.9[B] | 20.85[A] | 21.41[B] | 34.67[C] | 31.2[D] | 26.44[C] | 31.17[D] |
| | wt% ENB | | 6.6[A] | 6.7[B] | 6.34[A] | 6.65[B] | 10.17[C] | 8.8[D] | 9.33[C] | 9.22[D] |
| Amount of third reactor component | wt%* | | 33.88 (3rd In-terpol) | | 32.08 (3rd In-terpol) | | 33.4 (1st Interpol) | | 34.32 (1st Interpol) | |
| Polymer MOONEY | ML (1+4) 125°C | MU | NM | 29.0 | NM | 31.7 | NM | 70.2 | NM | 69.8 |
| CONV. GPC | Mn | g/mol | 140,563 | 23,390 | 108,966 | 29,452 | 127,794 | 65,004 | 140,665 | 63,719 |
| | Mw | g/mol | 316,096 | 160,648 | 241,296 | 133,153 | 295,233 | 214,601 | 301,883 | 221,947 |
| | Mz | g/mol | 637,513 | 570,886 | 460,156 | 392,715 | 611,024 | 706,180 | 593,644 | 822,493 |
| | Mw/Mn = MWD | | 2.25 | 6.87 | 2.21 | 4.52 | 2.31 | 3.30 | 2.15 | 3.48 |
| | Mz/Mn | | 4.54 | 24.4 | 4.22 | 13.3 | 4.78 | 10.9 | 4.22 | 12.9 |
| | Mz/Mw | | 2.02 | 3.55 | 1.91 | 2.95 | 2.07 | 3.29 | 1.97 | 3.71 |
| Viscosity at 0.1 rad/s | (0.1 rad/s, 190°C) | Pa·s | 571,039 | 69,217 | 310,398 | 51,238 | 351,719 | 152,115 | 420,057 | 137,432 |
| Viscosity at 100 rad/s | (100 rad/s, 190°C) | Pa·s | 9,475 | 1,891 | 8,344 | 2022 | 6620 | 3714 | 8,681 | 3,481 |
| Rheology Ratio | RR = V0.1/V100 | | 60.3 | 36.6 | 37.2 | 25.3 | 53.1 | 41.0 | 48.4 | 39.5 |
| Rheology Parameter | (RR/Mn) x 1000 | mol/g | 0.43 | 1.56 | 0.34 | 0.86 | 0.42 | 0.63 | 0.34 | 0.62 |
| RR/MWD | | | 26.8 | 5.33 | 16.8 | 5.60 | 23.0 | 12.4 | 22.5 | 11.4 |
| $T_m$ (DSC) | | °C | 72.3 | 68.4 | 71.7 | 66.3 | 4.3 | -6.0 | 7.6 | -0.1 |

(continued)

| | | Units | EPDM01 (Second Composition) | | EPDM02 (Second Composition) | | EPDM03 (First Composition) | | EPDM04 (First Composition) | |
|---|---|---|---|---|---|---|---|---|---|---|
| | | | First reactor | Second Reactor (final polymer composition) | First reactor | Second Reactor (final polymer composition) | First reactor | Second Reactor (final polymer composition) | First reactor | Second reactor (final polymer composition) |
| $T_g$ (DSC) | | °C | -26.9 | -37.4 | -26.9 | -37.5 | -40.7 | -45.9 | -41.7 | -45.9 |
| $T_c$ (DSC) | | °C | 57.3 | 57.7 | 55.8 | 53.4 | -1.34 | -12.2 | 0.4 | -13.3 |
| % cryst. | | % | 21.1 | 18.6 | 20.8 | 16.8 | 7.9 | 4.4 | 7.8 | 3.7 |

*Based on weight of second (final) reactor product.
NM = Not measured.
A) The wt% defined as the wt% of the noted monomer in the third (EPDM) interpolymer, and based on the weight of the third interpolymer.
B) The wt% is defined as the average wt% of the noted monomer in the third (EPDM) and the fourth (EPDM) interpolymers, and based on the weight of the third and the fourth interpolymers.
C) The wt% defined as the wt% of the noted monomer in the first (EPDM) interpolymer, and based on the weight of the first interpolymer.
D) The wt% is defined as the average wt% of the noted monomer in the first (EPDM) and the second (EPDM) interpolymers, and based on the weight of the first and the second interpolymers.

**Polymer Compositions**

Formulated polymer compositions are listed in Table 5 below.

Table 5: Polymer Compositions (wt. parts)

|  | Inv. 1 | Inv. 2 | Inv. 3 | Inv. 4 | Comp. A |
|---|---|---|---|---|---|
| EPDM (low MV)/ amt. EPDM (low MV) | EPDM01/ 30 | EPDM02/ 30 | EPDM01/ 30 | EPDM02/ 30 | NORDEL 4725P / 30 |
| EPDM (high MV)/ amt. EPDM (high MV) | EPDM03/ 70 | EPDM03/ 70 | EPDM04/ 30 | EPDM04/ 30 | NORDEL 5565/ 70 |
| SPHERON 6000A | 75 | 75 | 75 | 75 | 75 |
| SILFIT Z91 | 110 | 110 | 110 | 110 | 110 |
| SUNPAR 2280 | 70 | 70 | 70 | 70 | 70 |
| RHENOGRAN ZnO-70 | 5 | 5 | 5 | 5 | 5 |
| STEARIC ACID | 1 | 1 | 1 | 1 | 1 |
| RHENOGRAN CaO-80 | 8 | 8 | 8 | 8 | 8 |
| PEG4000 | 2 | 2 | 2 | 2 | 2 |
| STRUKTOL W33 | 2 | 2 | 2 | 2 | 2 |
| RETARDER E-80 | 0.5 | 0.5 | 0.5 | 0.5 | 0.5 |
| RHENOGRAN MBTS-70 | 1.5 | 1.5 | 1.5 | 1.5 | 1.5 |
| RHENOGRAN ZBEC-70 | 2 | 2 | 2 | 2 | 2 |
| RHENOGRAN TP-50 | 2.5 | 2.5 | 2.5 | 2.5 | 2.5 |
| RHENOGRAN CBS-80 | 0.5 | 0.5 | 0.5 | 0.5 | 0.5 |
| RHENOGRAN CLD-80 | 1 | 1 | 1 | 1 | 1 |
| RHENOGRAN S-80 | 0.75 | 0.75 | 0.75 | 0.75 | 0.75 |
| Total | 381.75 | 381.75 | 381.75 | 381.75 | 381.75 |

Each composition was mixed in a HARBURG FREUDENBERGER internal mixer, equipped with intermeshing rotors, using a standard "upside-down" mixing procedure, and adding the first composition (EPDMs) and second composition (EPDMs) last, after the addition of all the additives. The "1.5 L net chamber" was filled to a filling level of 75%. The rotor speed was kept constant at 45 RPM during the mixing cycle. The feed temperature was 50°C, and the final composition was mixed for 240 seconds, or mixed until the drop temperature reached 110°C, whichever came first. The composition was then homogenized two-roll mill (90°C) for three minutes, and sheeted out to form an uncured sheet. The rheology properties of each formulated composition are shown in Table 6.

Table 6: Polymer Composition Rheology Properties

|  | Inv. 1 | Inv. 2 | Inv. 3 | Inv. 4 | Comp. A |
|---|---|---|---|---|---|
| Mooney Viscosity (ML (1+4)@100°C) | 44 | 45 | 42 | 44 | 45 |
| Rheology Ratio (RR) | 95 | 89 | 96 | 88 | 69 |
| MLRA (100°C, 3min) | 620 | 329 | 496 | 517 | 346 |
| MLRA/ML | 14.0 | 7.2 | 11.7 | 11.6 | 7.7 |

Green Strength properties are shown in Table 7. See also Figure 1. A higher Green Strength is usually required, in order to have superior dimensional stability of a complex profile, extruded from a formulated composition. Typically, in an electrically resistive EPDM-based formulation, the reduction of the carbon black (CB) and the addition of a non-reinforcing white filler result in inferior Green Strength of the formulation, and thus, inferior dimensional stability of an extruded profile, formed from such a formulation. However, it was discovered that the inventive compositions provide significantly higher Green Strength, as compared to the comparative composition. Cure characteristics and Mooney Scorch are shown in Table 8.

Table 7: Green Strength (ASTM D412, test speed 500 mm/min, 23°C)

|  | Modulus 25% MPa | Modulus 50% MPa | Modulus 100% MPa | Max Tensile Strength MPa | Max. Elongation % |
|---|---|---|---|---|---|
| Inv. 1 | 0.6 | 0.7 | 0.9 | 2.6 | 871 |
| Inv. 2 | 0.5 | 0.6 | 0.7 | 2.4 | 1019 |
| Inv. 3 | 0.6 | 0.9 | 1.3 | 2.5 | 690 |
| Inv. 4 | 0.6 | 0.6 | 0.7 | 2.5 | 1065 |
| Comp. A | 0.5 | 0.6 | 0.5 | 0.6 | 45 |

Table 8: Cure and Scorch Properties of Formulated Compositions

|  | Formulation mixing | | MDR, ASTM D5289, 180°C | | | | | | Mooney Scorch, ASTM D1646, 125°C | | |
|---|---|---|---|---|---|---|---|---|---|---|---|
|  | Time (sec) | Final Temp (°C) | ML (dNm) | MH (dNm) | MH-ML (dNm) | ts2 (min) | t90 (min) | Cure Rate Index $(s^{-1})$ | t3 (min) | t18 (min) | Cure Index (min) |
| Inv. 1 | 240 | 100 | 0.91 | 10.47 | 9.56 | 0.83 | 2.01 | 84.7 | 6.72 | 10.27 | 3.6 |
| Inv. 2 | 240 | 107 | 0.92 | 11.03 | 10.11 | 0.81 | 1.99 | 84.7 | 6.27 | 9.8 | 3.5 |
| Inv. 3 | 240 | 97 | 0.85 | 10.17 | 9.32 | 0.91 | 2.23 | 75.8 | 7.38 | 11.28 | 3.8 |
| Inv. 4 | 240 | 102 | 0.86 | 11.08 | 10.22 | 0.86 | 2.32 | 68.5 | 7.07 | 10.79 | 3.7 |
| Comp. A | 240 | 103 | 0.80 | 12.46 | 11.66 | 0.89 | 2.22 | 75.2 | 8.02 | 12.50 | 4.5 |

As seen in Table 8, the inventive compositions each have a high entanglement density, as indicated by a high "ML" value, as compared to the comparative composition. Overall, the inventive compositions also have faster curing, as indicate by lower ts2, t90, t3 and t18 values. Inventive 1 and Inventive 2 especially have high "ML" values and low ts2, t90, t3 and t18 values.

**Garvey Die Extrusion - Extruded Profile**

Garvey Die Extrusion was performed using a THERMO HAAKE POLYLAB System, associated with a HAAKE RHEOMEX 104. The barrel was heated to 70°C, and the extruder operated at a revolution speed of 50 RPM. Each formulated polymer composition was extruded through the ASTM Extrusion Garvey die, according to ASTM D2230. The temperature of the die was set to 100°C. The rating of the extruded profiles was done according to the ASTM D2230 rating System A. Results are shown in Table 9.

According to ASTM D2230, the System A rating (visual observation against control samples) is based on four separate characteristics (Swelling, Edge, Surface, Corner), each ranked by a number from 1 (poor) to 4 (excellent). The rating for the "Swelling" refers to the swelling or porosity in the profile. "Edge" refers to the sharpness and continuity of the 30° edge. "Surface" refers to the smoothness of the surface. "Corner" refers to the sharpness and continuity of the corners. As seen in Table 9, the inventive compositions form uniform extruded profiles that maintain good "System A" ratings.

Table 9: Ranking of Garvey Die Extruded Profiles according to ASTM D2230 Scheme A

|  | Swelling | Edge (30°) | Surface | Corner | Density (g/cc)* |
|---|---|---|---|---|---|
| Inv. 1 | 3 | 3 | 3 | 3 | 1.30 |
| Inv. 2 | 3 | 3 | 3 | 3 | 1.30 |
| Inv. 3 | 3 | 3 | 2 | 2 | 1.30 |

(continued)

|  | Swelling | Edge (30°) | Surface | Corner | Density (g/cc)* |
|---|---|---|---|---|---|
| Inv. 4 | 3 | 3 | 3 | 3 | 1.30 |
| Comp. A | 3-4 | 3 | 3 | 3 | 1.29 |
| *Note, regarding density, 1 cc = 1 cm$^3$. | | | | | |

## Compression Molded Plaques

The mechanical properties (Hardness, Tensile, Tear) of the cured polymer compositions were measured from compression molded plaques. For each formulated composition, a sample of the uncured sheet (see above) was compression molded, in accordance to ASTM D3182, using a PHI (100-ton press). The desired mold (10 cm x 10 cm x 2 mm) was placed on a platen. The sample (uncured blanket) was cut slightly smaller than the dimensions of the individual mold cavity. The mill direction was marked, and the sample was labeled. The sample was placed in a preheated mold, taking care to place properly for mill direction. The platens were closed. The molding pressure was 100 bars, and the temperature was 180°C, ambient atmosphere. Cure times were specified, such as, for example, t90 + 3 minutes, where "t90" is the time for the sample to reach 90% of its maximum cure (MH), as determined by MDR. When the specified cure time ended, the bottom platen automatically opened. The sample was removed, and immediately placed in water to stop the curing. Samples were conditioned for 24 hours at room temperature, prior to testing. Mechanical properties are shown in Table 10 and Table 11 (after heat aging at 100°C for 72 hours, in hot air). Table 12 lists the volume resistivity data for each composition.

Table 10: Mechanical Properties of Cured Compositions

|  | Hardness Shore A, ASTM D2240 | Trouser Tear Strength Type T, ASTM D624 | Tensile Strength, ASTM D412 | | |
|---|---|---|---|---|---|
|  |  | N/mm | Modulus 100% (MPa) | Max. Tensile Strength (MPa) | Max. Elongation (%) |
| Inv. 1 | 65 | 12.3 | 2.09 | 8 | 657 |
| Inv. 2 | 65 | 11.7 | 2.02 | 8 | 655 |
| Inv. 3 | 63 | 11.9 | 1.97 | 7 | 657 |
| Inv. 4 | 63 | 11.6 | 2.01 | 7 | 641 |
| Comp. A | 61 | 10.4 | 1.78 | 7 | 644 |

Table 11: Mechanical Properties of Cured Compositions after Ageing (100°C for 72 hrs)

|  | Hardness Shore A, ASTM D2240 | Tensile Strength, ASTM D412 | | | | | |
|---|---|---|---|---|---|---|---|
|  |  | Modulus 100% (MPa) | Retention (%) | Max. Tensile Strength (MPa) | Retention (%) | Max. Elongation (%) | Retention (%) |
| Inv. 1 | 69 | 2.59 | 124 | 7.7 | 99 | 551 | 84 |
| Inv. 2 | 68 | 2.56 | 127 | 7.5 | 95 | 540 | 82 |
| Inv. 3 | 67 | 2.50 | 127 | 7.3 | 99 | 544 | 99 |
| Inv. 4 | 67 | 2.47 | 123 | 7.6 | 102 | 546 | 102 |
| Comp. A | 63 | 2.03 | 114 | 6.5 | 90 | 554 | 86 |

Table 12: Volume Resistivity

|  | Volume Resistivity ($\Omega$.cm) |
|---|---|
| Inv. 1 | 7 x 10$^{13}$ |

(continued)

| | Volume Resistivity ($\Omega$.cm) |
|---|---|
| Inv. 2 | $6 \times 10^{13}$ |
| Inv. 3 | $6 \times 10^{13}$ |
| Inv. 4 | $6 \times 10^{13}$ |
| Comp A | $2 \times 10^{12}$ |

As seen in Table 10, the inventive compositions have good mechanical properties, including exceptionally good Tensile Strength, Modulus, Elongation, Shore A Hardness and Tear Strength. As seen in Table 11, the inventive compositions maintain good mechanical properties after ageing at 100°C (72hours). Several properties (for example, Shore A Hardness and Modulus 100%) improve after ageing. As seen in Table 12, the volume resistivity for each inventive composition is significantly higher than that of the comparative composition.

**Claims**

1.  A composition comprising a first composition and a second composition, and

    wherein the first composition comprises a first ethylene/alpha-olefin/nonconjugated polyene interpolymer and a second ethylene/alpha-olefin/nonconjugated polyene interpolymer; and
    wherein the second composition comprises a third ethylene/alpha-olefin/nonconjugated polyene interpolymer and a fourth ethylene/alpha-olefin/nonconjugated polyene interpolymer; and
    wherein the first composition has a Mooney Viscosity (ML(1+4), 125°C) $\geq$ 50 and (ML(1+4), 125°C) $\leq$ 84, and a Rheology Parameter ((RR/Mn) x 1000) $\geq$ 0.50 and ((RR/Mn) x 1000) $\leq$ 0.76;
    wherein the second composition has a Mooney Viscosity (ML(1+4), 125°C) < 50, and a Rheology Parameter ((RR/Mn) x 1000) $\geq$ 0.60 and ((RR/Mn) x 1000) $\leq$ 2.00;
    wherein RR is V0.1/V100 and wherein V0.1 and V100 are determined by Dynamic Mechanical Spectroscopy as set out in the Test Methods section of the description.

2.  The composition of any one of the previous claims, wherein the first composition has a RR/MWD ratio $\geq$ 9.00, wherein RR is V0.1/V100 and wherein V0.1 and V100 are determined by Dynamic Mechanical Spectroscopy as set out in the Test Methods section of the description.

3.  The composition of any one of the previous claims, wherein the first composition has a molecular weight distribution MWD $\geq$ 2.40.

4.  The composition of any one of the previous claims, wherein the second composition has a molecular weight distribution MWD $\geq$ 4.00.

5.  The composition of any one of the previous claims, wherein, for the first composition, the first interpolymer is a first EPDM and the second interpolymer is a second EPDM; and wherein the second EPDM differs from the first EPDM in at least one property selected from Mn, Mw, Mz, MWD, Mooney Viscosity, V0.1, V100, RR, or any combination thereof; wherein RR is V0.1/V100 and V0.1 and V100 are determined by Dynamic Mechanical Spectroscopy as set out in the Test Methods section of the description.

6.  The composition of any one of the previous claims, wherein the composition has a ratio { [RR]$_{\text{First Composition}}$ / [RR]$_{\text{Second Composition}}$} $\geq$ 0.90, wherein RR is V0.1/V100 and wherein V0.1 and V100 are determined by Dynamic Mechanical Spectroscopy as set out in the Test Methods section of the description.

7.  The composition of any one of the previous claims, wherein the composition has a ratio {[MWD]$_{\text{First Composition}}$ / [MWD]$_{\text{Second Composition}}$} $\geq$ 0.400.

8.  The composition of any one of the previous claims, wherein the composition further comprises a calcined filler formed from a filler composition comprising a kaolinite.

9. The composition of any one of the previous claims, wherein the composition further comprises carbon black.

10. A crosslinked composition formed from the composition of any one of the previous claims.

11. An article comprising at least one component formed from the composition of any one of the previous claims.

12. The article of claim 11, wherein the article is an extruded article, an injection molded article, or a thermoformed article.

13. The article of claim 11 or claim 12, wherein the article is selected from a weather strip, a hose, a belt, a building material, a roofing membrane, a wire and cable jacket, an flooring material, a computer part, a gasket, or a tire.


**Patentansprüche**

1. Zusammensetzung, umfassend eine erste Zusammensetzung und eine zweite Zusammensetzung, und

   wobei die erste Zusammensetzung ein erstes Interpolymer aus Ethylen/Alpha-Olefin/nicht konjugiertem Polyen und ein zweites Interpolymer aus Ethylen/Alpha-Olefin/nicht konjugiertem Polyen umfasst; und
   wobei die zweite Zusammensetzung ein drittes Interpolymer aus Ethylen/Alpha-Olefin/nicht konjugiertem Polyen und ein viertes Interpolymer aus Ethylen/Alpha-Olefin/nicht konjugiertem Polyen umfasst; und
   wobei die erste Zusammensetzung eine Mooney-Viskosität (ML(1+4), 125 °C) $\geq$ 50 und (ML(1+4), 125 °C) $\leq$ 84 und einen Rheologieparameter ((RR/Mn) x 1000) $\geq$ 0,50 und ((RR/Mn) x 1000) $\leq$ 0,76 aufweist;
   wobei die zweite Zusammensetzung eine Mooney-Viskosität (ML(1+4), 125 °C) < 50 und einen Rheologieparameter ((RR/Mn) x 1000) $\geq$ 0,60 und ((RR/Mn) x 1000) $\leq$ 2,00 aufweist;
   wobei RR V0,1/V100 ist und wobei V0,1 und V100 durch dynamische mechanische Spektroskopie bestimmt werden, wie in dem Abschnitt Prüfverfahren der Beschreibung dargelegt.

2. Zusammensetzung nach einem der vorstehenden Ansprüche, wobei die erste Zusammensetzung ein Verhältnis RR/MWD $\geq$ 9,00 aufweist,
   wobei RR V0,1/V100 ist und wobei V0,1 und V100 durch dynamische mechanische Spektroskopie bestimmt werden, wie in dem Abschnitt Prüfverfahren der Beschreibung dargelegt.

3. Zusammensetzung nach einem der vorstehenden Ansprüche, wobei die erste Zusammensetzung eine Molekulargewichtsverteilung MWD $\geq$ 2,40 aufweist.

4. Zusammensetzung nach einem der vorstehenden Ansprüche, wobei die zweite Zusammensetzung eine Molekulargewichtsverteilung MWD $\geq$ 4,00 aufweist.

5. Zusammensetzung nach einem der vorstehenden Ansprüche, wobei, für die erste Zusammensetzung, das erste Interpolymer ein erstes EPDM ist und das zweite Interpolymer ein zweites EPDM ist; und wobei sich das zweite EPDM von dem ersten EPDM in mindestens einer Eigenschaft unterscheidet, die aus Mn, Mw, Mz, MWD, Mooney-Viskosität, V0,1, V100, RR oder einer beliebigen Kombination davon ausgewählt ist;
   wobei RR V0,1/V100 ist und V0,1 und V100 durch dynamische mechanische Spektroskopie bestimmt werden, wie in dem Abschnitt Prüfverfahren der Beschreibung dargelegt.

6. Zusammensetzung nach einem der vorstehenden Ansprüche, wobei die Zusammensetzung ein Verhältnis {[RR]$_{Erste}$ Zusammensetzung / [RR]$_{Zweite}$ Zusammensetzung} $\geq$ 0,90 aufweist,
   wobei RR V0,1/V100 ist und wobei V0,1 und V100 durch dynamische mechanische Spektroskopie bestimmt werden, wie in dem Abschnitt Prüfverfahren der Beschreibung dargelegt.

7. Zusammensetzung nach einem der vorstehenden Ansprüche, wobei die Zusammensetzung ein Verhältnis {[MWD]$_{Erste\ Zusammensetzung}$ / [MWD]$_{Zweite\ Zusammensetzung}$} $\geq$ 0,400 aufweist.

8. Zusammensetzung nach einem der vorstehenden Ansprüche, wobei die Zusammensetzung ferner einen kalzinierten Füllstoff umfasst, der aus einer Füllstoffzusammensetzung, umfassend einen Kaolinit, ausgebildet ist.

9. Zusammensetzung nach einem der vorstehenden Ansprüche, wobei die Zusammensetzung ferner Ruß umfasst.

**10.** Vernetzte Zusammensetzung, die aus der Zusammensetzung nach einem der vorstehenden Ansprüche ausgebildet ist.

**11.** Erzeugnis, umfassend mindestens eine Komponente, die aus der Zusammensetzung nach einem der vorstehenden Ansprüche ausgebildet ist.

**12.** Erzeugnis nach Anspruch 11, wobei das Erzeugnis ein extrudiertes Erzeugnis, ein spritzgegossenes Erzeugnis oder ein thermogeformtes Erzeugnis ist.

**13.** Erzeugnis nach Anspruch 11 oder 12, wobei das Erzeugnis aus einem Dichtungsstreifen, einem Schlauch, einem Riemen, einem Baumaterial, einer Dachmembran, einem Draht- und Kabelmantel, einem Bodenbelag, einem Computerteil, einer Dichtung oder einem Reifen ausgewählt ist.

**Revendications**

**1.** Composition comprenant une première composition et une seconde composition, et

dans laquelle la première composition comprend un premier interpolymère éthylène/alpha-oléfine/polyène non conjugué et un deuxième interpolymère éthylène/alpha-oléfine/polyène non conjugué ; et
dans laquelle la seconde composition comprend un troisième interpolymère éthylène/alpha-oléfine/polyène non conjugué et un quatrième interpolymère éthylène/alpha-oléfine/polyène non conjugué ; et
dans laquelle la première composition a une viscosité Mooney (ML(1+4), 125 °C) $\geq$ 50 et (ML(1+4), 125 °C) $\leq$ 84, et un paramètre de rhéologie ((RR/Mn) x 1 000) $\geq$ 0,50 et ((RR/Mn) x 1 000) $\leq$ 0,76 ;
dans laquelle la seconde composition a une viscosité Mooney (ML(1+4), 125 °C) < 50, et un paramètre de rhéologie ((RR/Mn) x 1 000) $\geq$ 0,60 et ((RR/Mn) x 1 000) $\leq$ 2,00 ;
dans laquelle RR est V0,1/V100 et dans laquelle V0,1 et V100 sont déterminées par spectroscopie mécanique dynamique comme indiqué dans la section « Méthodes d'essai » de la description.

**2.** Composition selon l'une quelconque des revendications précédentes, dans laquelle la première composition a un rapport RR/MWD $\geq$ 9,00,
dans laquelle RR est V0,1/V100 et dans laquelle V0,1 et V100 sont déterminées par spectroscopie mécanique dynamique comme indiqué dans la section « Méthodes d'essai » de la description.

**3.** Composition selon l'une quelconque des revendications précédentes, dans laquelle la première composition a une distribution des masses moléculaires MWD $\geq$ 2,40.

**4.** Composition selon l'une quelconque des revendications précédentes, dans laquelle la seconde composition a une distribution des masses moléculaires MWD $\geq$ 4,00.

**5.** Composition selon l'une quelconque des revendications précédentes, dans laquelle, pour la première composition, le premier interpolymère est un premier EPDM et le deuxième interpolymère est un second EPDM ; et dans laquelle le second EPDM diffère du premier EPDM par au moins une propriété choisie parmi Mn, Mw, Mz, MWD, viscosité Mooney, V0,1, V100, RR, ou toute combinaison de ceux-ci ;
dans laquelle RR est V0,1/V100 et V0,1 et V100 sont déterminées par spectroscopie mécanique dynamique comme indiqué dans la section « Méthodes d'essai » de la description.

**6.** Composition selon l'une quelconque des revendications précédentes, dans laquelle la composition a un rapport {[RR] p$_{\text{remière}}$ composition / [RR]$_{\text{seconde}}$ composition} $\geq$ 0,90,
dans laquelle RR est V0,1/V100 et dans laquelle V0,1 et V100 sont déterminées par spectroscopie mécanique dynamique comme indiqué dans la section « Méthodes d'essai » de la description.

**7.** Composition selon l'une quelconque des revendications précédentes, dans laquelle la composition a un rapport {[MWD]$_{\text{première composition}}$ / [MWD]$_{\text{seconde composition}}$} $\geq$ 0,400.

**8.** Composition selon l'une quelconque des revendications précédentes, dans laquelle la composition comprend en outre une charge calcinée formée à partir d'une composition de charge comprenant une kaolinite.

9. Composition selon l'une quelconque des revendications précédentes, dans laquelle la composition comprend en outre du noir de carbone.

10. Composition réticulée formée à partir de la composition selon l'une quelconque des revendications précédentes.

11. Article comprenant au moins un composant formé à partir de la composition selon l'une quelconque des revendications précédentes.

12. Article selon la revendication 11, dans lequel l'article est un article extrudé, un article moulé par injection, ou un article thermoformé.

13. Article selon la revendication 11 ou la revendication 12, dans lequel l'article est choisi parmi une bande d'étanchéité, un tuyau, une courroie, un matériau de construction, une membrane de toiture, une gaine de fil et de câble, un matériau de revêtement de sol, une pièce d'ordinateur, un joint, ou un pneu.

FIGURE 1

**REFERENCES CITED IN THE DESCRIPTION**

**Patent documents cited in the description**

- WO 2014084893 A
- WO 2013096573 A
- WO 2007136494 A
- WO 2011008837 A
- WO 2019161013 A1
- EP 3464462 A1
- WO 2019157687 A1
- US 2009239014 A1
- US 5977251 A
- US 6545088 B
- US 5919988 A

**Non-patent literature cited in the description**

- **WILLIAMS** ; **WARD**. *J. Polym. Sci., Polym. Let.*, 1968, vol. 6, 621
- *CHEMICAL ABSTRACTS*, 74-85-1
- *CHEMICAL ABSTRACTS*, 115-07-1
- *CHEMICAL ABSTRACTS*, 16219-75-3